# EUROPEAN PATENT SPECIFICATION

(11) **EP 3 672 349 B1**
(45) Date of publication and mention of the grant of the patent: **22.10.2025**
(21) Application number: 18847003.3
(22) Date of filing: 15.08.2018
(51) Int. Cl.: H04W 74/00, H04W 74/0833, H04W 74/08

(54) **RANDOM ACCESS METHOD, TERMINAL, AND BASE STATION**
DIREKTZUGRIFFSVERFAHREN, ENDGERÄT UND BASISSTATION
PROCÉDÉ D'ACCÈS ALÉATOIRE, TERMINAL ET STATION DE BASE

(30) Priority: 18.08.2017 CN 201710712248
(43) Date of publication of application: 24.06.2020
(73) Proprietor: Vivo Mobile Communication Co., Ltd., Dongguan, Guangdong 523860 (CN)
(72) Inventor: WU, Yumin, Dongguan Guangdong 523860 (CN); LU, Zhi, Dongguan Guangdong 523860 (CN)
(74) Representative: Lavoix
(86) International application number: PCT/CN2018/100636
(87) International publication number: WO 2019/034074

(56) References cited:
- EP-A1- 3 297 386
- WO-A1-2016/182385
- CN-A- 104 254 135
- CN-A- 106 105 366
- CN-A- 106 255 223
- CN-A- 106 941 730
- US-A1- 2013 215 861
- US-A1- 2016 029 358
- US-B2- 9 380 582

## Description

### TECHNICAL FIELD

The present disclosure relates to the field of wireless communication technology, in particular to a random access method, UE, and a base station.

### BACKGROUND

In a long term evolution (LTE) system, a base station configures a "physical random access channel (PRACH) configuration index" for user equipment (UE) by using a radio resource control (RRC) message. The UE searches, according to the index, a frame structure table (for example, a frame-structure-type-1 table as shown in Table 1) for a random-access-resource configuration corresponding to the index. The random-access-resource configuration information corresponding to each index includes:
1) A preamble format (for example, 0/1/2/3);
2) A system frame number (for example, Even or Any system frame number);
3) A subframe number (for example, 1/4/7 or the like).

**Table 1**

| PRACH configuration Index | Preamble Format | System Frame Number | Subframe Number | PRACH Configuration Index | Preamble Format | System Frame Number | Subframe Number |
|---|---|---|---|---|---|---|---|
| 0 | 0 | Even | 1 | 32 | 2 | Even | 1 |
| 1 | 0 | Even | 4 | 33 | 2 | Even | 4 |
| 2 | 0 | Even | 7 | 34 | 2 | Even | 7 |
| 3 | 0 | Any | 1 | 35 | 2 | Any | 1 |
| 4 | 0 | Any | 4 | 36 | 2 | Any | 4 |
| 5 | 0 | Any | 7 | 37 | 2 | Any | 7 |

Beam-based transmission of random access signal is introduced in the fifth-generation (5G) mobile communication system. That is, the UE may continuously transmit a plurality of random access signals on a plurality of random access resources. A same random access resource configuration or different random access resource configurations may be used for the continuously transmitted random access signals, so as to ensure that the base station may receive the random access signals of the UE at different times and on different beams.

In addition, more flexible subframe or slot configurations are introduced in the 5G system. That is, the quantity of subframes/slots in a system frame is variable, whereby it is required that configuration of random access resource adapts more flexibly to different frame structures.

Due to more flexible frame or slot configurations in the 5G system and the fact that different beam sweeping modes may result in different random access resource configurations, a conventional index-based random access resource configuration method leads to an inflexible random access resource configuration. For example, to enable a base station to receive random signals on different beams, more concentrated random access resources are configured for transmission, resulting in a waste of configured random access resources and an increased power loss of UE during transmission of random access signals.

WO 2016/182385 A1 provides a method for performing a random access process in an unlicensed band, and a device using the same. The device receives a random access preamble (RAP) order instructing the transmission of a RAP. The device performs a clear channel assessment (CCA) in an unlicensed cell during an RAP window so as to transmit the RAP when the device succeeds in CCA.

US9380582 B2 teaches that the base station sends information, such as the number of repetitions of MS random access signal, the maximum number of the beams that are formed by steering, and timing information of the MS TX beams, to the mobile station. The maximum number of the beams that are formed by steering is sent to the mobile station such that the mobile station can determine the number of the repetitions of the mobile station random access preambles.

### SUMMARY

In order to configure a random access resource more flexibly, the present disclosure provides in some embodiments a random access method, UE, and a base station.

The invention is set out in the appended set of claims.

### BRIEF DESCRIPTION OF THE DRAWINGS

To describe the technical solutions in some embodiments of the present disclosure more clearly, the accompanying drawings required for describing the embodiments of the present disclosure are briefly described hereinafter. Apparently, the drawings accompanying the following descriptions show only some embodiments of the present disclosure, and a person of ordinary skill in the art may still derive other drawings from these accompanying drawings without creative efforts.
Fig. 1 is a schematic flow diagram of a random access method according to some embodiments of the present disclosure;
Fig. 2 is a schematic flow diagram of another random access method according to some embodiments of the present disclosure;
Fig. 3 is a schematic structural diagram of a base station according to some embodiments of the present disclosure;
Fig. 4 is a schematic structural diagram of UE according to some embodiments of the present disclosure;
Fig. 5 is another schematic structural diagram of a base station according to some embodiments of the present disclosure;
Fig. 6 is another schematic structural diagram of UE according to some embodiments of the present disclosure; and
Fig. 7 is yet another schematic structural diagram of UE according to some embodiments of the present disclosure.

### DETAILED DESCRIPTION

To make the objects, technical solutions, and advantages of some embodiments of the present disclosure more clearly, the technical solutions in the embodiments of the present disclosure are clearly and thoroughly described below with reference to the accompanying drawings of the embodiments of the present disclosure. Apparently, the described embodiments are some embodiments of the present disclosure, but are not all the embodiments. Based on the described embodiments of the present disclosure, all other embodiments derived by a person of ordinary skill in the art shall fall within the scope of the present disclosure.

In order to configure a random access resource more flexibly, the present disclosure provides in some embodiments a random access method, UE, and a base station.

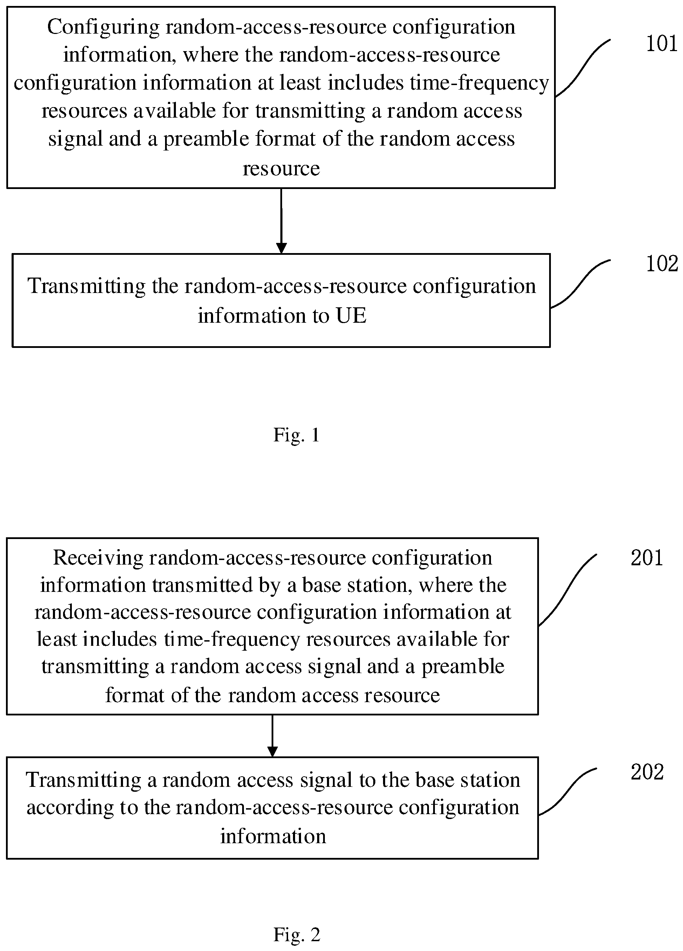

Referring to Fig. 1, Fig. 1 is a schematic flow diagram of a random access method according to some embodiments of the present disclosure. The random access method is applied to a base station and includes step 101 and step 102.

The step 101 includes: configuring random-access-resource configuration information, where the random-access-resource configuration information at least includes time-frequency resources available for transmitting a random access signal and a preamble format of the random access resource.

The step 102 includes: transmitting the random-access-resource configuration information to UE.

In some embodiments of the present disclosure, different from the random access method of the related art, rather than transmitting a PRACH configuration index to UE, a base station generates specific random-access-resource configuration information and transmits the specific configuration information to the UE, so that a random access resource may be configured as required more flexibly, to adapt to different application scenarios and avoid a waste of configured random access resources.

The base station in some embodiments of the present disclosure may be a base transceiver station (BTS) in global system for mobile communication (GSM) or code division multiple access (CDMA), or may be a nodeB (NB) in wideband code division multiple access (WCDMA), or may be an evolutional Node B (eNB or eNodeB) in LTE, or a relay station or an access point, or a base station in a 5G network, or the like, which is not limited herein.

In some embodiments of the present disclosure, the time-frequency resources available for transmitting a random access signal include at least one of the following: 1) information of a time domain position available for transmitting a random access signal; 2) information of a frequency domain position available for transmitting a random access signal; 3) information of a time domain start position for transmitting a plurality of random access signals; 4) information of a frequency domain start position for transmitting a plurality of random access signals.

Transmission of a plurality of random access signals in some embodiments of the present disclosure refers to beam-based transmission of a random access signal. That is, UE may continuously transmit a plurality of random access signals on a plurality of random access resources. A same random access resource configuration or different random access resource configurations may be used for the plurality of random access signals, so as to ensure that the base station may receive the random access signals of the UE at different times and on different beams.

In some embodiments of the present disclosure, the plurality of random access signals refer to at least two random access signals.

The information of a time domain position and/or the information of a frequency domain position available for transmitting a random access signal may be information of a time domain position and/or information of a frequency domain position available for transmitting one random access signal, or may be information of all time domain positions and/or information of all frequency domain positions available for transmitting a plurality of random access signals.

In some embodiments of the present disclosure, the information of the time domain position available for transmitting a random access signal may include at least one of the following: 11) an index of a system frame available for transmitting a random access signal; 12) an index of a subframe available for transmitting a random access signal; 13) an index of a slot available for transmitting a random access signal.

In some embodiments of the present disclosure, the information of the time domain start position for transmitting a plurality of random access signals may include at least one of the following: 31) an index of a start system frame for transmitting a plurality of random access signals; 32) an index of a start subframe for transmitting a plurality of random access signals; 33) an index of a start slot for transmitting a plurality of random access signals.

In some embodiments of the present disclosure, in addition to the two basic and required types of configuration information, that is, the time-frequency resources available for transmitting a random access signal and the preamble format of the random access resource, the random-access-resource configuration information configured by the base station may further include other configuration information, so that the configuration of random access resources is more flexible.

In some embodiments of the present disclosure, the random-access-resource configuration information further includes at least one of the following: 5) information of a quantity of times the UE is allowed to transmit a random access signal; 6) indication information indicating whether to stop transmitting a random access signal after a random access response (RAR) is received; ) a random-access-resource period; 8) an index of a preamble used in each one of a plurality of random access signal transmission; 9) an index of a beam used in each one of a plurality of random access signal transmission; 10) an index of a beam group used in each one of a plurality of random access signal transmission; 11) an index of a beam pair used in each one of a plurality of random access signal transmission.

The 5) information of a quantity of times the UE is allowed to transmit a random access signal and/or the 6) indication information indicating whether to stop transmitting a random access signal if an RAR is received may be predetermined by a protocol.

In some embodiments of the present disclosure, the information of a quantity of times the UE is allowed to transmit a random access signal may include at least one of the following: 51) indication information indicating that the UE is allowed to transmit a single random access signal; 52) indication information indicating that the UE is allowed to transmit a single random access signal before the UE receives an RAR; 53) indication information indicating that the UE is allowed to transmit a plurality of random access signals; 54) indication information indicating that the UE is allowed to transmit a plurality of random access signals before the UE receives an RAR; 55) indication information indicating that the UE is allowed to transmit a single random access signal if an RAR reception duration expires and no RAR is received; 56) indication information indicating that the UE is allowed to transmit a plurality of random access signals if an RAR reception duration expires and no RAR is received; 57) a quantity of times of transmitting a plurality of random access signals.

For example, the quantity of times of transmission is 5, that is, the UE may continuously transmit five random access signals on five random access resources.

In some embodiments of the present disclosure, a base station may configure various types of random access resources as required and transmit the random-access-resource configurations to UE, so that the configuration of random access resources is more flexible, to adapt to different application scenarios and avoid a waste of configured random access resources. For example, configuration information related to "a plurality of random access signals" may be configured in a scenario of beam-based transmission of a random access signal.

Referring to Fig. 2, a schematic flow diagram of another random access method according to some embodiments of the present disclosure is illustrated. The random access method includes step 201 and step 202.

The step 201 includes: receiving random-access-resource configuration information transmitted by a base station, where the random-access-resource configuration information at least includes time-frequency resources available for transmitting a random access signal and a preamble format of the random access resource.

The step 202 includes: transmitting a random access signal to the base station according to the random-access-resource configuration information.

Since the random-access-resource configuration information includes the preamble format of the random access resource, it is required for UE to use the preamble format indicated in the random-access-resource configuration information to transmit the random access signal.

In some embodiments of the present disclosure, UE transmits a random access signal according to specific random-access-resource configuration information configured by a base station, to adapt to different application scenarios, thereby ensuring that all random access signals transmitted by the UE may be received by the base station and meanwhile reducing the power consumption of the UE.

The UE in some embodiments of the present disclosure may be a wireless terminal or may be a wired terminal. The wireless terminal may be a device that provides a user with voice and/or other service data connectivity, a handheld device having a wireless connection function or another processing device connected to a wireless modem. The wireless terminal may communicate with one or more core networks through a radio access network (RAN). The wireless terminal may be a mobile terminal, for example, a mobile phone (or referred to as a "cellular" phone) or a computer equipped with a mobile terminal, for example, may be a portable, pocket-sized, handheld, computer built-in or in-vehicle mobile apparatus, which exchanges voice and/or data with the RAN. For example, the wireless terminal may be a device such as a personal communication service (PCS) phone, a cordless phone, a session initiation protocol (SIP) phone, a wireless local loop (WLL) station or a personal digital assistant (PDA). The wireless terminal may also be referred to as a system, a subscriber unit, a subscriber station, a mobile station, a mobile, a remote station, a remote terminal, an access terminal, a user terminal, a user agent, a user device or user equipment, which is not limited herein.

In some embodiments of the present disclosure, the time-frequency resources available for transmitting a random access signal configured by the base station include at least one of the following: 1) information of a time domain position available for transmitting a random access signal; 2) information of a frequency domain position available for transmitting a random access signal; 3) information of a time domain start position for transmitting a plurality of random access signals; 4) information of a frequency domain start position for transmitting a plurality of random access signals.

Transmission of a plurality of random access signals in some embodiments of the present disclosure refers to beam-based transmission of a random access signal. That is, the UE may continuously transmit a plurality of random access signals on a plurality of random access resources. A same random access resource configuration or different random access resource configurations may be used for the plurality of random access signals, so as to ensure that the base station may receive the random access signals of the UE at different times and on different beams.

In some embodiments of the present disclosure, the plurality of random access signals refer to at least two random access signals.

The information of the time domain position and/or the information of the frequency domain position available for transmitting a random access signal may be information of a time domain position and/or information of a frequency domain position available for transmitting one random access signal or may be information of all time domain positions and/or information of all frequency domain positions available for transmitting a plurality of random access signals.

In some embodiments of the present disclosure, the information of the time domain position available for transmitting a random access signal may include at least one of the following: 11) an index of a system frame available for transmitting a random access signal; 12) an index of a subframe available for transmitting a random access signal; 13) an index of a slot available for transmitting a random access signal.

In some embodiments of the present disclosure, the information of the time domain start position for transmitting a plurality of random access signals may include at least one of the following: 31) an index of a start system frame for transmitting a plurality of random access signals; 32) an index of a start subframe for transmitting a plurality of random access signals; 33) an index of a start slot for transmitting a plurality of random access signals.

In some embodiments of the present disclosure, in addition to two basic and required types of configuration information, that is, the time-frequency resources available for transmitting a random access signal and the preamble format of the random access resource, the random-access-resource configuration information configured by the base station may further include other configuration information, so that the configuration of random access resources is more flexible.

In some embodiments of the present disclosure, the random-access-resource configuration information configured by the base station further includes at least one of the following: 5) information of a quantity of times the UE is allowed to transmit a random access signal; 6) indication information indicating whether to stop transmitting a random access signal if an RAR is received; 7) a random-access-resource period; 8) an index of a preamble used in each one of a plurality of random access signal transmission; 9) an index of a beam used in each one of a plurality of random access signal transmission; 10) an index of a beam group used in each one of a plurality of random access signal transmission; 11) an index of a beam pair used in each one of a plurality of random access signal transmission.

In some embodiments of the present disclosure, the information of a quantity of times the UE is allowed to transmit a random access signal may include at least one of the following: 51) indication information indicating that the UE is allowed to transmit a single random access signal; 52) indication information indicating that the UE is allowed to transmit a single random access signal before the UE receives an RAR; 53) indication information indicating that the UE is allowed to transmit a plurality of random access signals; 54) indication information indicating that the UE is allowed to transmit a plurality of random access signals before the UE receives an RAR; 55) indication information indicating that the UE is allowed to transmit a single random access signal if an RAR reception duration expires and no RAR is received; 56) indication information indicating that the UE is allowed to transmit a plurality of random access signals if an RAR reception duration expires and no RAR is received; 57) a quantity of times of transmitting a plurality of random access signals.

For example, the quantity of times of transmission is 5, that is, the UE may continuously transmit five random access signals on five random access resources.

In some embodiments of the present disclosure, apart from configuring, by the base station, the random-access-resource configuration information, some of the random-access-resource configuration information may be predetermined by a protocol. That is, the random access method in some embodiments of the present disclosure may further include: acquiring predetermined random-access-resource configuration information.

The transmitting a random access signal to the base station according to the random-access-resource configuration information includes: transmitting a random access signal to the base station according to the random-access-resource configuration information configured by the base station and the predetermined random-access-resource configuration information.

In some embodiments of the present disclosure, optionally, the 5) information of a quantity of times the UE is allowed to transmit a random access signal and/or the 6) indication information indicating whether to stop transmitting a random access signal if an RAR is received in the random-access-resource configuration information may be predetermined by a protocol.

In some embodiments of the present disclosure, when the random-access-resource configuration information (the random-access-resource configuration information may be configured by the base station and may also be predetermined) includes indication information indicating that the UE is allowed to transmit a single random access signal and/or indication information indicating that the UE is allowed to transmit a single random access signal before the UE receives an RAR, the transmitting a random access signal to the base station according to the random-access-resource configuration information includes: selecting one time-frequency resource from the time-frequency resources available for transmitting a random access signal and transmitting one random access signal to the base station on the one selected time-frequency resource before an RAR is received. Optionally, when the time-frequency resource is a time domain resource, a closest available time domain resource is selected in the time domain, and one random access signal is transmitted to the base station on the selected available time domain resource.

In some embodiments of the present disclosure, when the random-access-resource configuration information (the random-access-resource configuration information may be configured by the base station and may also be predetermined) includes indication information indicating that the UE is allowed to transmit a plurality of random access signals and/or indication information indicating that the UE is allowed to transmit a plurality of random access signals before the UE receives an RAR, the transmitting a random access signal to the base station according to the random-access-resource configuration information includes: selecting a plurality of time-frequency resources from the time-frequency resources available for transmitting a random access signal, and transmitting one random access signal to the base station on each selected time-frequency resource. Optionally, when the time-frequency resource is a time domain resource, the plurality of random access signals are transmitted on a plurality of consecutive available time domain resources starting from the closest available time domain resource in the time domain. Certainly, when available time domain resources are not consecutive, a plurality of available time domain resources may be sequentially selected in order from the closest to the farthest in the time domain to transmit the plurality of random access signals.

In some embodiments of the present disclosure, when the random-access-resource configuration information (the random-access-resource configuration information may be configured by the base station and may also be predetermined) includes a quantity of times of transmitting a plurality of random access signals, the transmitting a random access signal to the base station according to the random-access-resource configuration information includes: the quantity of times of transmitting a plurality of random access signals is the quantity of times of transmission configured in the configuration information. For example, when the quantity of times of transmission is 5, five time-frequency resources are selected from the available time-frequency resources, and one random access signal is separately transmitted on each time-frequency resource.

In some embodiments of the present disclosure, when the random-access-resource configuration information includes an index of a preamble used in each one of a plurality of random access signal transmission, the transmitting a random access signal to the base station according to the random-access-resource configuration information includes: encoding, for each random access signal transmission to the base station, the to-be-transmitted random access signal according to an index of a preamble corresponding to the transmission.

In some embodiments of the present disclosure, when the random-access-resource configuration information includes an index of a beam, a beam group or a beam pair used in each one of a plurality of random access signal transmission, the transmitting a random access signal to the base station according to the random-access-resource configuration information includes: transmitting, for each random access signal transmission to the base station, the random access signal on a beam, a beam group or a beam pair corresponding to the transmission.

In some embodiments of the present disclosure, when the random-access-resource configuration information includes information of a time domain start position for transmitting a plurality of random access signals or information of a frequency domain start position for transmitting a plurality of random access signals, the transmitting a random access signal to the base station according to the random-access-resource configuration information includes: when a random access signal is transmitted to the base station for the first time, transmitting the random access signal on a time-frequency resource corresponding to the information of the time domain start position or information of the frequency domain start position.

In some embodiments of the present disclosure, when the random-access-resource configuration information includes a random-access-resource period, the transmitting a random access signal to the base station according to the random-access-resource configuration information includes: transmitting the plurality of random access signals according to the random-access-resource period.

In some embodiments of the present disclosure, when the random-access-resource configuration information (the random-access-resource configuration information may be configured by the base station and may also be predetermined) includes indication information indicating that the UE is allowed to transmit a single random access signal if an RAR reception duration expires and no RAR is received or indication information indicating that the UE is allowed to transmit a plurality of random access signals if an RAR reception duration expires and no RAR is received, the transmitting the random access signal to the base station according to the random-access-resource configuration information includes: selecting random access resources different from a random access resource previously used to transmit a random access signal to transmit the plurality of random access signals if an RAR reception duration expires and no RAR is received, thereby avoiding a further failure of random access signal transmission.

The random access method of the present disclosure is described below in detail with reference to the interaction between a base station and UE.

### Example 1

A random access method provided in some embodiments of the present disclosure includes step 301 and step 302.

The step 301 includes: transmitting, by a base station, random-access-resource configuration information to UE, where the random-access-resource configuration information includes: indication information indicating that the UE is allowed to transmit a single random access signal (which may also be predetermined by a protocol); indication information indicating that the UE is allowed to transmit a single random access signal before the UE receives an RAR (which may also be predetermined by a protocol); an index of a subframe available for transmitting a random access signal; an index of a slot available for transmitting a random access signal; an index of a system frame available for transmitting a random access signal; a random-access-resource period; a preamble format of the random access resource. In some other embodiments of the present disclosure, the first item and/or the second item may be predetermined by a protocol. Moreover, one of the first item and the second item may be configured.

The step 302 includes: transmitting, by the UE, a random access signal to the base station according to the random-access-resource configuration information transmitted by the base station, which specifically includes: one random access signal is transmitted before an RAR is received; the time domain resource used by the random access signal is one closest time domain resource of available time domain resources; the random access signal is transmitted by using the preamble format of the random access resource indicated in the configuration information.

### Example 2

A random access method provided in some embodiments of the present disclosure includes step 401 and step 402.

The step 401 includes: transmitting, by a base station, random-access-resource configuration information to UE, where the random-access-resource configuration information includes: indication information indicating that the UE is allowed to transmit a plurality of random access signals (which may also be predetermined by a protocol); indication information indicating that the UE is allowed to transmit a plurality of random access signals before the UE receives an RAR (which may also be predetermined by a protocol); an index of a subframe available for transmitting a random access signal; an index of a slot available for transmitting a random access signal; an index of a system frame available for transmitting a random access signal; a random-access-resource period; a preamble format of the random access resource; a quantity of times of transmitting a plurality of random access signals (which may also be predetermined by a protocol); an index of a preamble used in each one of a plurality of random access signal transmission; an index of a beam, a beam group or a beam pair used in each one of a plurality of random access signal transmission; indication information indicating that random access signal transmission is stopped if an RAR is received (which may also be predetermined by a protocol). In some other embodiments of the present disclosure, the first item, the second item, the eighth item and/or the eleventh item may be predetermined by a protocol. Moreover, one of the first item and the second item may be configured.

The step 402 includes: transmitting, by the UE, a random access signal to the base station according to the random-access-resource configuration information transmitted by the base station, which specifically includes: a plurality of available time domain resources are sequentially selected in order from the closest to the farthest in the time domain to transmit the plurality of random access signals; the random access signal is transmitted by using the preamble format of the random access resource indicated in the configuration information; the quantity of times of transmitting a plurality of random access signals is the quantity of times of transmission configured in the configuration information; for each random access signal transmission to the base station, the to-be-transmitted random access signal is encoded according to an index of a preamble corresponding to the transmission; for each random access signal transmission to the base station, the random access signal is transmitted on a beam, a beam group or a beam pair corresponding to the transmission; transmission of a random access signal is stopped if an RAR is received.

### Example 3

A random access method provided in some embodiments of the present disclosure includes step 501 and step 502.

The step 501 includes: transmitting, by a base station, random-access-resource configuration information to UE, where the random-access-resource configuration information includes: indication information indicating that the UE is allowed to transmit a plurality of random access signals (which may also be predetermined by a protocol); indication information indicating that the UE is allowed to transmit a plurality of random access signals before the UE receives an RAR (which may also be predetermined by a protocol); a quantity of times of transmitting a plurality of random access signals (which may also be predetermined by a protocol); a preamble format of the random access resource; an index of a start subframe for transmitting a plurality of random access signals; an index of a start slot for transmitting a plurality of random access signals; an index of a start system frame for transmitting a plurality of random access signals; a random-access-resource period; an index of a preamble used in each one of a plurality of random access signal transmission; an index of a beam, a beam group or a beam pair used in each one of a plurality of random access signal transmission; indication information indicating that random access signal transmission is stopped if an RAR is received (which may also be predetermined by a protocol).

The step 502 includes: transmitting, by the UE, a random access signal to the base station according to random-access-resource configuration information transmitted by the base station, which specifically includes: the quantity of times of transmitting a plurality of random access signals is the quantity of times of transmission configured in the configuration information; a random access signal is transmitted by using the preamble format of the random access resource indicated in the configuration information; when a random access signal is transmitted to the base station for the first time, the random access signal is transmitted on a time domain resource corresponding to the information of the time domain start position. (For example, the random access signal is transmitted according to any one of the following time domain start positions: an index of a start subframe for transmitting a plurality of random access signals; an index of a start slot for transmitting a plurality of random access signals; an index of a start system frame for transmitting a plurality of random access signals); the plurality of random access signals are transmitted one by one, starting from the position of transmitting a random access signal for the first time, according to the random-access-resource period; for each random access signal transmission to the base station, the to-be-transmitted random access signal is encoded according to an index of a preamble corresponding to the transmission; for each random access signal transmission to the base station, the random access signal is transmitted on a beam, a beam group or a beam pair corresponding to the transmission; the transmission of random access signal is stopped if an RAR is received.

### Example 4

A random access method provided in some embodiments of the present disclosure includes step 601 and step 602.

The step 601 includes: transmitting, by a base station, random-access-resource configuration information to UE, where the random-access-resource configuration information includes: indication information indicating that the UE is allowed to transmit a single random access signal before the UE receives an RAR (which may also be predetermined by a protocol); indication information indicating that the UE is allowed to transmit a plurality of random access signals if an RAR reception duration expires and no RAR is received (which may also be predetermined by a protocol); an index of a subframe available for transmitting a random access signal; an index of a slot available for transmitting a random access signal; an index of a system frame available for transmitting a random access signal; a random-access-resource period; a preamble format of the random access resource used in each one of a plurality of random access signal transmission; a quantity of times of transmitting a plurality of random access signals (which may also be predetermined by a protocol); an index of a preamble used in each one of a plurality of random access signal transmission; an index of a beam, a beam group or a beam pair used in each one of a plurality of random access signal transmission. In some other embodiments of the present disclosure, the first item, the second item and/or the eighth item may be predetermined by a protocol. Moreover, one of the first item and the second item may be configured.

The step 602 includes: transmitting, by the UE, a random access signal to the base station according to the random-access-resource configuration information transmitted by the base station, which specifically includes: one random access signal is transmitted before an RAR is received; for the first random access signal transmitted before an RAR is received, the time domain resource used is one closest time domain resource of available time domain resources; for a plurality of random access signals transmitted if an RAR reception duration expires and no RAR is received, the time domain resource used is one closest time domain resource of available time domain resources, and the time-frequency resource is different from a resource previously used to transmit a random access signal; for a plurality of random access signals transmitted if an RAR reception duration expires and no RAR is received, each time when a random access signal is transmitted, the indicated preamble format of the random access resource is used; the quantity of times of transmitting a plurality of random access signals is the quantity of times of transmission configured in the configuration information; for each random access signal transmission to the base station, the to-be-transmitted random access signal is encoded according to an index of a preamble corresponding to the transmission; for each random access signal transmission to the base station, the random access signal is transmitted on a beam, a beam group or a beam pair corresponding to the transmission.

### Example 5

A random access method provided in some embodiments of the present disclosure includes step 701 and step 702.

The step 701 includes: transmitting, by a base station, random-access-resource configuration information to UE, where the random-access-resource configuration information includes: indication information indicating that the UE is allowed to transmit a single random access signal before the UE receives an RAR (which may also be predetermined by a protocol); indication information indicating that the UE is allowed to transmit a plurality of random access signals if an RAR reception duration expires and no RAR is received (which may also be predetermined by a protocol); a quantity of times of transmitting a plurality of random access signals (which may also be predetermined by a protocol); a preamble format of the random access resource used in each one of a plurality of random access signal transmission; an index of a start subframe for transmitting a plurality of random access signals; an index of a start slot for transmitting a plurality of random access signals; an index of a start system frame for transmitting a plurality of random access signals; a random-access-resource period; an index of a preamble used in each one of a plurality of random access signal transmission; an index of a beam, a beam group or a beam pair used in each one of a plurality of random access signal transmission.

The step 702 includes: transmitting, by the UE, a random access signal to the base station according to the random-access-resource configuration information transmitted by the base station, which specifically includes: the quantity of times of transmitting a plurality of random access signals is the quantity of times of transmission configured in the configuration information; for a plurality of random access signals transmitted if an RAR reception duration expires and no RAR is received, each time when a random access signal is transmitted, the indicated preamble format of the random access resource is used; one random access signal is transmitted before an RAR is received; for a plurality of random access signals transmitted if an RAR reception duration expires and no RAR is received, when a random access signal is transmitted to the base station for the first time, the random access signal is transmitted on a time domain resource corresponding to information of the time domain start position, (for example, the random access signal is transmitted according to any one of the following time domain start positions: an index of a start subframe for transmitting a plurality of random access signals; an index of a start slot for transmitting a plurality of random access signals; an index of a start system frame for transmitting a plurality of random access signals); for a plurality of random access signals transmitted if an RAR reception duration expires and no RAR is received, the plurality of random access signals are transmitted one by one, starting from the position of transmitting a random access signal for the first time, according to the random-access-resource period, where the used time-frequency resource is different from a resource previously used to transmit a random access signal; for each random access signal transmission to the base station, the to-be-transmitted random access signal is encoded according to an index of a preamble corresponding to the transmission; for each random access signal transmission to the base station, the random access signal is transmitted on a beam, a beam group or a beam pair corresponding to the transmission.

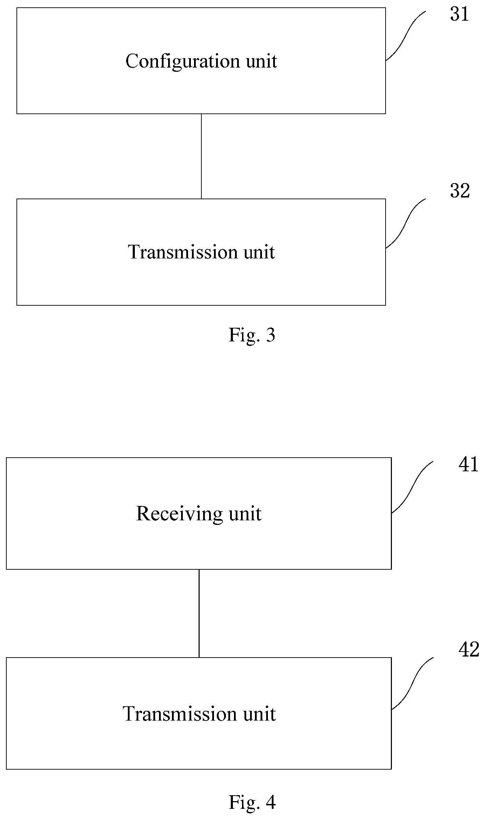

Based on same creative concept, referring to Fig. 3, the present disclosure further provides a base station 30. The base station 30 includes: a configuration unit 31, configured to configure random-access-resource configuration information, where the random-access-resource configuration information at least includes time-frequency resources available for transmitting a random access signal and a preamble format of the random access resource; and a transmission unit 32, configured to transmit the random-access-resource configuration information to UE.

In some embodiments of the present disclosure, different from the random access method of the related art, rather than transmitting a PRACH configuration index to UE, a base station generates specific random-access-resource configuration information and transmits the specific configuration information to the UE, so that a random access resource may be configured more flexibly as required, to adapt to different application scenarios and avoid a waste of configured random access resources.

In some embodiments of the present disclosure, the time-frequency resources available for transmitting a random access signal include at least one of the following: 1) information of a time domain position available for transmitting a random access signal; 2) information of a frequency domain position available for transmitting a random access signal; 3) information of a time domain start position for transmitting a plurality of random access signals; 4) information of a frequency domain start position for transmitting a plurality of random access signals.

Transmission of a plurality of random access signals in some embodiments of the present disclosure refers to beam-based transmission of a random access signal. That is, the UE may continuously transmit a plurality of random access signals on a plurality of random access resources. A same random access resource configuration or different random access resource configurations may be used for the plurality of random access signals, so as to ensure that the base station may receive the random access signals of the UE at different times and on different beams.

In some embodiments of the present disclosure, the plurality of random access signals refer to at least two random access signals.

The information of the time domain position and/or the information of the frequency domain position available for transmitting a random access signal may be information of a time domain position and/or information of a frequency domain position available for transmitting one random access signal or may be information of all time domain positions and/or information of all frequency domain positions available for transmitting a plurality of random access signals.

In some embodiments of the present disclosure, the information of the time domain position available for transmitting a random access signal may include at least one of the following: 11) an index of a system frame available for transmitting a random access signal; 12) an index of a subframe available for transmitting a random access signal; 13) an index of a slot available for transmitting a random access signal.

In some embodiments of the present disclosure, the information of the time domain start position for transmitting a plurality of random access signals may include at least one of the following: 31) an index of a start system frame for transmitting a plurality of random access signals; 32) an index of a start subframe for transmitting a plurality of random access signals; 33) an index of a start slot for transmitting a plurality of random access signals.

In some embodiments of the present disclosure, in addition to two basic and required types of configuration information, that is, the time-frequency resources available for transmitting a random access signal and the preamble format of the random access resource, the random-access-resource configuration information configured by the base station may further include other configuration information, so that the configuration of random access resources is more flexible.

In some embodiments of the present disclosure, the random-access-resource configuration information further includes at least one of the following: 5) information of a quantity of times the UE is allowed to transmit a random access signal; 6) indication information indicating whether to stop transmitting a random access signal if an RAR is received; 7) a random-access-resource period; 8) an index of a preamble used in each one of a plurality of random access signal transmission; 9) an index of a beam used in each one of a plurality of random access signal transmission; 10) an index of a beam group used in each one of a plurality of random access signal transmission; 11) an index of a beam pair used in each one of a plurality of random access signal transmission.

The 5) information of a quantity of times the UE is allowed to transmit a random access signal and/or the 6) indication information indicating whether to stop transmitting a random access signal if an RAR is received may be predetermined by a protocol.

In some embodiments of the present disclosure, the information of a quantity of times the UE is allowed to transmit a random access signal may include at least one of the following: 51) indication information indicating that the UE is allowed to transmit a single random access signal; 52) indication information indicating that the UE is allowed to transmit a single random access signal before the UE receives an RAR; 53) indication information indicating that the UE is allowed to transmit a plurality of random access signals; 54) indication information indicating that the UE is allowed to transmit a plurality of random access signals before the UE receives an RAR; 55) indication information indicating that the UE is allowed to transmit a single random access signal if an RAR reception duration expires and no RAR is received; 56) indication information indicating that the UE is allowed to transmit a plurality of random access signals if an RAR reception duration expires and no RAR is received; 57) a quantity of times of transmitting a plurality of random access signals.

For example, the quantity of times of transmission is 5, that is, the UE may continuously transmit five random access signals on five random access resources.

In some embodiments of the present disclosure, a base station may configure various types of random access resources as required and transmit the random-access-resource configurations to UE, so that the configuration of random access resources is more flexible, to adapt to different application scenarios and avoid a waste of configured random access resources. For example, configuration information related to "a plurality of random access signals" may be configured in a scenario of beam-based transmission of a random access signal.

Referring to Fig. 4, the present disclosure further provides UE 40. The UE 40 includes: a receiving unit 41, configured to receive random-access-resource configuration information transmitted by a base station, where the random-access-resource configuration information at least includes time-frequency resources available for transmitting a random access signal and a preamble format of the random access resource; and a transmission unit 42, configured to transmit a random access signal to the base station according to the random-access-resource configuration information.

Since the random-access-resource configuration information includes the preamble format of the random access resource, it is required for UE to use the preamble format indicated in the random-access-resource configuration information to transmit the random access signal.

In some embodiments of the present disclosure, UE transmits a random access signal according to specific random-access-resource configuration information configured by a base station, to adapt to different application scenarios, thereby ensuring that all random access signals transmitted by the UE may be received by the base station and meanwhile reducing the power consumption of the UE.

In some embodiments of the present disclosure, the time-frequency resources available for transmitting a random access signal configured by the base station include at least one of the following: 1) information of a time domain position available for transmitting a random access signal; 2) information of a frequency domain position available for transmitting a random access signal; 3) information of a time domain start position for transmitting a plurality of random access signals; 4) information of a frequency domain start position for transmitting a plurality of random access signals.

Transmission of a plurality of random access signals in some embodiments of the present disclosure refers to beam-based transmission of a random access signal. That is, the UE may continuously transmit a plurality of random access signals on a plurality of random access resources. A same random access resource configuration or different random access resource configurations may be used for the plurality of random access signals, so as to ensure that the base station may receive the random access signals of the UE at different times and on different beams.

In some embodiments of the present disclosure, the plurality of random access signals refer to at least two random access signals.

The information of the time domain position and/or the information of the frequency domain position available for transmitting a random access signal may be information of a time domain position and/or information of a frequency domain position available for transmitting one random access signal or may be information of all time domain positions and/or information of all frequency domain positions available for transmitting a plurality of random access signals.

In some embodiments of the present disclosure, the information of the time domain position available for transmitting a random access signal may include at least one of the following: 11) an index of a system frame available for transmitting a random access signal; 12) an index of a subframe available for transmitting a random access signal; 13) an index of a slot available for transmitting a random access signal.

In some embodiments of the present disclosure, the information of the time domain start position for transmitting a plurality of random access signals may include at least one of the following: 31) an index of a start system frame for transmitting a plurality of random access signals; 32) an index of a start subframe for transmitting a plurality of random access signals; 33) an index of a start slot for transmitting a plurality of random access signals.

In some embodiments of the present disclosure, in addition to two basic and required types of configuration information, that is, the time-frequency resources available for transmitting a random access signal and the preamble format of the random access resource, the random-access-resource configuration information configured by the base station may further include other configuration information, so that the configuration of random access resources is more flexible.

In some embodiments of the present disclosure, the random-access-resource configuration information configured by the base station further includes at least one of the following: 5) information of a quantity of times the UE is allowed to transmit a random access signal; 6) indication information indicating whether to stop transmitting a random access signal if an RAR is received; 7) a random-access-resource period; 8) an index of a preamble used in each one of a plurality of random access signal transmission; 9) an index of a beam used in each one of a plurality of random access signal transmission; 10) an index of a beam group used in each one of a plurality of random access signal transmission; 11) an index of a beam pair used in each one of a plurality of random access signal transmission.

In some embodiments of the present disclosure, the information of a quantity of times the UE is allowed to transmit a random access signal may include at least one of the following: 51) indication information indicating that the UE is allowed to transmit a single random access signal; 52) indication information indicating that the UE is allowed to transmit a single random access signal before the UE receives an RAR; 53) indication information indicating that the UE is allowed to transmit a plurality of random access signals; 54) indication information indicating that the UE is allowed to transmit a plurality of random access signals before the UE receives an RAR; 55) indication information indicating that the UE is allowed to transmit a single random access signal if an RAR reception duration expires and no RAR is received; 56) indication information indicating that the UE is allowed to transmit a plurality of random access signals if an RAR reception duration expires and no RAR is received; 57) a quantity of times of transmitting a plurality of random access signals.

For example, the quantity of times of transmission is 5, that is, the UE may continuously transmit five random access signals on five random access resources.

In some embodiments of the present disclosure, apart from configuring, by the base station, the random-access-resource configuration information, some of the random-access-resource configuration information may be predetermined by a protocol. That is, the UE provided in some embodiments of the present disclosure may further include: an acquisition unit, configured to acquire predetermined random-access-resource configuration information. The transmission unit is further configured to transmit a random access signal to the base station according to the random-access-resource configuration information configured by the base station and the predetermined random-access-resource configuration information.

In some embodiments of the present disclosure, optionally, the 5) information of a quantity of times the UE is allowed to transmit a random access signal and/or the 6) indication information indicating whether to stop transmitting a random access signal if an RAR is received in the random-access-resource configuration information may be predetermined by a protocol.

In some embodiments of the present disclosure, when the random-access-resource configuration information (the random-access-resource configuration information may be configured by the base station and may also be predetermined) includes indication information indicating that the UE is allowed to transmit a single random access signal and/or indication information indicating that the UE is allowed to transmit a single random access signal before the UE receives an RAR, the transmission unit is further configured to: before an RAR is received, select one time-frequency resource from the time-frequency resources available for transmitting a random access signal, and transmit one random access signal to the base station on the selected time-frequency resource.

In some embodiments of the present disclosure, when the random-access-resource configuration information (the random-access-resource configuration information may be configured by the base station and may also be predetermined) includes indication information indicating that the UE is allowed to transmit a plurality of random access signals and/or indication information indicating that the UE is allowed to transmit a plurality of random access signals before the UE receives an RAR, the transmission unit is further configured to: select a plurality of time-frequency resources from the time-frequency resources available for transmitting a random access signal, and transmit one random access signal to the base station on each selected time-frequency resource.

In some embodiments of the present disclosure, when the random-access-resource configuration information (the random-access-resource configuration information may be configured by the base station and may also be predetermined) includes a quantity of times of transmitting a plurality of random access signals, the transmission unit is further configured to transmit a quantity of random access signals to the base station where the quantity of random access signals is equal to the quantity of times.

In some embodiments of the present disclosure, when the random-access-resource configuration information includes an index of a preamble used in each one of a plurality of random access signal transmission, the transmission unit is further configured to: for each random access signal transmission to the base station, encode the to-be-transmitted random access signal according to an index of a preamble corresponding to the transmission.

In some embodiments of the present disclosure, when the random-access-resource configuration information includes an index of a beam, a beam group or a beam pair used in each one of a plurality of random access signal transmission, the transmission unit is further configured to: for each random access signal transmission to the base station, transmit the random access signal on a beam, a beam group or a beam pair corresponding to the transmission.

In some embodiments of the present disclosure, when the random-access-resource configuration information includes information of a time domain start position for transmitting a plurality of random access signals or information of a frequency domain start position for transmitting a plurality of random access signals, the transmission unit is further configured to: when a random access signal is transmitted to the base station for the first time, transmit the random access signal on a time-frequency resource corresponding to the information of the time domain start position or the information of the frequency domain start position.

In some embodiments of the present disclosure, when the random-access-resource configuration information includes a random-access-resource period, the transmission unit is further configured to transmit the plurality of random access signals according to the random-access-resource period.

In some embodiments of the present disclosure, when the random-access-resource configuration information (the random-access-resource configuration information may be configured by the base station and may also be predetermined) includes indication information indicating that the UE is allowed to transmit a single random access signal if an RAR reception duration expires and no RAR is received or indication information indicating that the UE is allowed to transmit a plurality of random access signals if an RAR reception duration expires and no RAR is received, the transmission unit is further configured to: if an RAR reception duration expires and no RAR is received, select resources different from the random access resource previously used to transmit the random access signal to transmit the plurality of random access signals.

The present disclosure further provides in some embodiments a base station. The base station includes a processor, a storage, and a computer program stored in the storage and configured to be executed by the processor, where the processor is configured to execute the computer program to implement the steps in the foregoing random access method applied to the base station.

The present disclosure further provides in some embodiments UE. The UE includes a processor, a storage, and a computer program stored in the storage and configured to be executed by the processor, where the processor is configured to execute the computer program to implement the steps in the foregoing random access method applied to the UE.

The present disclosure provides in some embodiments a computer readable storage medium storing therein a computer program, where the computer program is configured to be executed by a processor, to implement the steps in the foregoing random access method applied to a base station, and the same technical effect may be achieved. To avoid repetition, details are not described herein again.

The present disclosure provides in some embodiments a computer readable storage medium storing therein a computer program, where the computer program is configured to be executed by a processor, to implement the steps in the foregoing random access method applied to UE, and the same technical effect may be achieved. To avoid repetition, details are not described herein again.

The foregoing computer readable storage medium may be volatile or nonvolatile, transient or non-transient, for example, a read-only memory (ROM), a random access memory (RAM), a magnetic disk, an optical disc or the like.

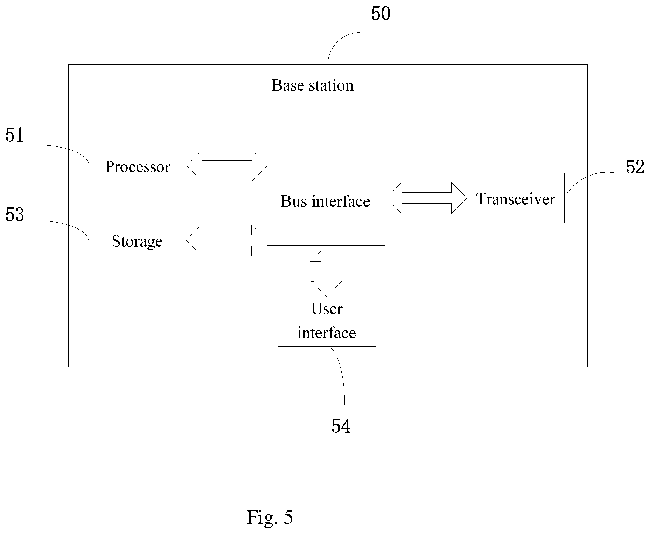

Referring to Fig. 5, a schematic structural diagram of a base station according to some embodiments of the present disclosure is illustrated. The base station may implement the details of the foregoing random access method applied to a base station and achieve the same effects. As shown in Fig. 5, a base station 50 includes a processor 51, a transceiver 52, a storage 53, a user interface 54, and a bus interface.

In some embodiments of the present disclosure, the base station 50 further includes a computer program stored in the storage 53 and configured to be executed by the processor 51. The processor 51 is configured to execute the computer program to implement the following steps: configuring random-access-resource configuration information, where the random-access-resource configuration information at least includes time-frequency resources available for transmitting a random access signal and a preamble format of the random access resource; transmitting the random-access-resource configuration information to UE.

In Fig. 5, a bus architecture may include any quantity of interconnected buses and bridges, and connect various circuits such as one or more processors represented specifically by the processor 51 and a storage represented specifically by the storage 53. The bus architecture may also link various other circuits such as peripherals, voltage regulators, and power management circuits, which are well known in the art, and therefore are not further described herein. The bus interface provides an interface. The transceiver 52 may include a plurality of elements, that is, a transmitter and a receiver, to allow for communication with various other apparatuses over a transmission medium. For different user devices, the user interface 54 may be an interface capable of externally/internally connecting desired devices, including, but not limited to, a keypad, a display, a speaker, a microphone, a joystick, etc.

The processor 51 is responsible for managing the bus architecture and general processing. The storage 53 may store data used by the processor 51 while performing operations.

Optionally, as an example, the time-frequency resources available for transmitting a random access signal include at least one of the following: information of a time domain position available for transmitting a random access signal; information of a frequency domain position available for transmitting a random access signal; information of a time domain start position for transmitting a plurality of random access signals; information of a frequency domain start position for transmitting a plurality of random access signals.

Optionally, as an example, the information of the time domain position includes at least one of the following: a system frame number, a subframe number, and a slot number; the information of the time domain start position includes at least one of the following: a start system frame number, a start subframe number, and a start slot number.

Optionally, as an example, the random-access-resource configuration information further includes at least one of the following: information of a quantity of times the UE is allowed to transmit a random access signal; indication information indicating whether to stop transmitting a random access signal if an RAR is received; a random-access-resource period; an index of a preamble used in each one of a plurality of random access signal transmission; an index of a beam used in each one of a plurality of random access signal transmission; an index of a beam group used in each one of a plurality of random access signal transmission; an index of a beam pair used in each one of a plurality of random access signal transmission.

Optionally, as an example, the information of a quantity of times the UE is allowed to transmit a random access signal includes at least one of the following: indication information indicating that the UE is allowed to transmit a single random access signal; indication information indicating that the UE is allowed to transmit a single random access signal before the UE receives an RAR; indication information indicating that the UE is allowed to transmit a plurality of random access signals; indication information indicating that the UE is allowed to transmit a plurality of random access signals before the UE receives an RAR; indication information indicating that the UE is allowed to transmit a single random access signal if an RAR reception duration expires and no RAR is received; indication information indicating that the UE is allowed to transmit a plurality of random access signals if an RAR reception duration expires and no RAR is received; a quantity of times of transmitting a plurality of random access signals.

In some embodiments of the present disclosure, different from the random access method of the related art, rather than transmitting a PRACH configuration index to UE, a base station generates specific random-access-resource configuration information and transmits the specific configuration information to the UE, so that a random access resource may be configured more flexibly as required, to adapt to different application scenarios and avoid a waste of configured random access resources.

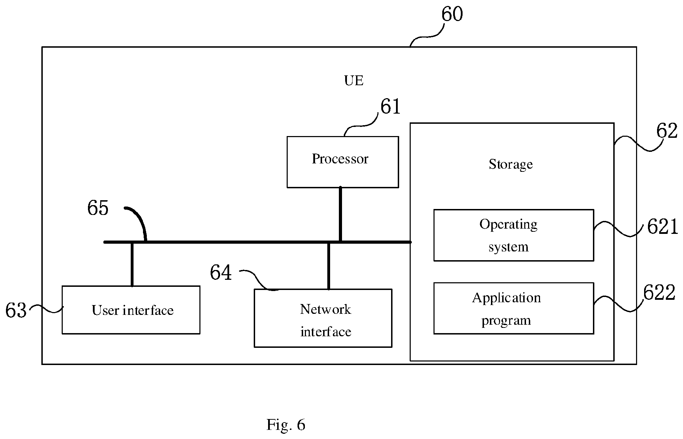

Referring to Fig. 6, the present disclosure provides UE 60. The UE 60 shown in Fig. 6 includes at least one processor 61, a storage 62, at least one network interface 64, and another user interface 63. The various components in the UE 60 are coupled together by a bus system 65. It may be understood that the bus system 65 is configured to implement connection and communication among these components. The bus system 65 further includes a power bus, a control bus, and a status signal bus in addition to a data bus. However, for clarity, various buses in Fig. 6 are all denoted as the bus system 65.

The user interface 63 may include a display, a keyboard or a point-and-click device (for example, a mouse, a trackball, a touch pad, a touch screen, or the like.

It may be understood that the storage 62 in some embodiments of the present disclosure may be a volatile storage or a nonvolatile storage or may include both a volatile storage and a nonvolatile storage. The nonvolatile storage may be a ROM, a programmable ROM (PROM), an erasable PROM (EPROM), an electrically EPROM (EEPROM) or a flash memory. The volatile storage may be a RAM used as an external cache. By way of example rather than limitation, many forms of RAMs such as a static RAM (SRAM), a dynamic RAM (DRAM), a synchronous DRAM (SDRAM), a double-data-rate (DDR) SDRAM, an enhanced SDRAM (ESDRAM), a Synchlink DRAM (SLDRAM), and a Direct Rambus RAM (DRRAM) may be used. The storage 62 in the system and method described herein is intended to include, but not limited to, these and any other appropriate types of storages.

In some implementations, the storage 62 stores the following elements, executable modules or data structures, or a subset thereof, or an extended set thereof: an operating system 621 and an application program 622.

The operating system 621 includes various system programs such as a framework layer program, a core library layer program, and a driver layer program, and is configured to implement various basis services and process a hardware-based task. The application program 622 includes various application programs such as a media player or a browser, and is configured to implement various application services. A program for implementing the method provided in some embodiments of the present disclosure may be included in the application program 622.

The UE 60 further includes a computer program stored in the storage 62 and configured to be executed by the processor 61, and the computer program may be specifically a computer program in the application program 622. The processor 61 is configured to execute the computer program to implement the following steps: receiving random-access-resource configuration information transmitted by a base station, where the random-access-resource configuration information at least includes time-frequency resources available for transmitting a random access signal and a preamble format of the random access resource; transmitting a random access signal to the base station according to the random-access-resource configuration information.

The foregoing method disclosed in some embodiments of the present disclosure may be applied to the processor 61 or implemented by the processor 61. The processor 61 may be an integrated circuit (IC) chip having a signal processing capability. During implementation, the steps in the foregoing method may be accomplished by hardware integrated logic circuits or instructions in a software form in the processor 61. The processor 61 may be a general-purpose processor, a digital signal processor (DSP), an application-specific integrated circuit (ASIC), a field-programmable gate array (FPGA), or other programmable logic device, discrete gate or transistor logic device, a discrete hardware component, which may implement or execute the methods, steps, and logic block diagrams disclosed in some embodiments of the present disclosure. The general-purpose processor may be a microprocessor or the processor may be any conventional processor or the like. The steps in the method disclosed with reference to some embodiments of the present disclosure may be directly embodied and accomplished by a hardware coding processor or accomplished by a combination of hardware and software modules in a coding processor. The software modules may reside in a well-established storage medium in the art such as a RAM, a flash memory, a ROM, a PROM or an electrically erasable programmable memory or a register. The storage medium resides in the storage 62. The processor 61 reads information in the storage 62 and accomplishes the steps in the foregoing method with its hardware.

It may be understood that these embodiments described in this specification may be implemented by hardware, software, firmware, middleware, microcode or a combination thereof. For a hardware implementation, a processing unit may be implemented in one or more ASICs, a DSP, a DSP device (DSPD), a programmable logic device (PLD), a field-programmable gate array (FPGA), a general-purpose processor, a controller, a microcontroller, a microprocessor, other electronic unit configured to perform the functions in the present application or a combination thereof.

For a software implementation, the technologies described in this specification may be implemented by using modules (for example, processes, functions or the like) that perform the functions described in this specification. Software code may be stored in a storage and executed by a processor. The storage may be implemented internally or externally to the processor.

Optionally, as an example, the time-frequency resources available for transmitting a random access signal include at least one of the following: information of a time domain position available for transmitting a random access signal; information of a frequency domain position available for transmitting a random access signal; information of a time domain start position for transmitting a plurality of random access signals; information of a frequency domain start position for transmitting a plurality of random access signals.

Optionally, as an example, the information of the time domain position includes at least one of the following: a system frame number, a subframe number, and a slot number; the information of the time domain start position includes at least one of the following: a start system frame number, a start subframe number, and a start slot number.

Optionally, as an example, the random-access-resource configuration information further includes at least one of the following: information of a quantity of times the UE is allowed to transmit a random access signal; indication information indicating whether to stop transmitting a random access signal if an RAR is received; a random-access-resource period; an index of a preamble used in each one of a plurality of random access signal transmission; an index of a beam used in each one of a plurality of random access signal transmission; an index of a beam group used in each one of a plurality of random access signal transmission; an index of a beam pair used in each one of a plurality of random access signal transmission.

Optionally, as an example, the processor 61 is configured to execute the computer program to further implement the following steps: acquiring predetermined random-access-resource configuration information; and transmitting a random access signal to the base station according to the random-access-resource configuration information configured by the base station and the predetermined random-access-resource configuration information.

Optionally, as an example, the predetermined random-access-resource configuration information includes information of a quantity of times the UE is allowed to transmit a random access signal and/or indication information indicating whether to stop transmitting a random access signal if an RAR is received.

Optionally, as an example, the information of a quantity of times the UE is allowed to transmit a random access signal includes at least one of the following: indication information indicating that the UE is allowed to transmit a single random access signal; indication information indicating that the UE is allowed to transmit a single random access signal before the UE receives an RAR; indication information indicating that the UE is allowed to transmit a plurality of random access signals; indication information indicating that the UE is allowed to transmit a plurality of random access signals before the UE receives an RAR; indication information indicating that the UE is allowed to transmit a single random access signal if an RAR reception duration expires and no RAR is received; indication information indicating that the UE is allowed to transmit a plurality of random access signals if an RAR reception duration expires and no RAR is received; a quantity of times of transmitting a plurality of random access signals.

Optionally, as an example, the processor 61 is configured to execute the computer program to further implement the following steps: when the random-access-resource configuration information includes indication information indicating that the UE is allowed to transmit a single random access signal and/or indication information indicating that the UE is allowed to transmit a single random access signal before the UE receives an RAR, selecting one time-frequency resource from the time-frequency resources available for transmitting a random access signal and transmitting one random access signal to the base station on the selected time-frequency resource before an RAR is received,.

Optionally, as an example, the processor 61 is configured to execute the computer program to further implement the following steps: when the random-access-resource configuration information includes indication information indicating that the UE is allowed to transmit a plurality of random access signals and/or indication information indicating that the UE is allowed to transmit a plurality of random access signals before the UE receives an RAR, selecting a plurality of time-frequency resources from the time-frequency resources available for transmitting a random access signal and transmitting one random access signal to the base station on each selected time-frequency resource.

Optionally, as an example, the processor 61 is configured to execute the computer program to further implement the following step: when the random-access-resource configuration information includes a quantity of times of transmitting a plurality of random access signals, transmitting a quantity of random access signals to the base station where the quantity of random access signals is equal to the quantity of times.

Optionally, as an example, the processor 61 is configured to execute the computer program to further implement the following step: when the random-access-resource configuration information includes an index of a preamble used in each one of a plurality of random access signal transmission, encoding, for each random access signal transmission to the base station, the to-be-transmitted random access signal according to an index of a preamble corresponding to the transmission.

Optionally, as an example, the processor 61 is configured to execute the computer program to further implement the following step: when the random-access-resource configuration information includes an index of a beam, a beam group or a beam pair used in each one of a plurality of random access signal transmission, transmitting, for each random access signal transmission to the base station, the random access signal on a beam, a beam group or a beam pair corresponding to the transmission.

Optionally, as an example, the processor 61 is configured to execute the computer program to further implement the following step: when the random-access-resource configuration information includes information of a time domain start position for transmitting a plurality of random access signals or information of a frequency domain start position for transmitting a plurality of random access signals, transmitting the random access signal on a time-frequency resource corresponding to the information of the time domain start position or the information of the frequency domain start position when a random access signal is transmitted to the base station for the first time.

Optionally, as an example, the processor 61 is configured to execute the computer program to further implement the following step: when the random-access-resource configuration information includes a random-access-resource period, transmitting the plurality of random access signals according to the random-access-resource period.

Optionally, as an example, the processor 61 is configured to execute the computer program to further implement the following step: when the random-access-resource configuration information includes indication information indicating that the UE is allowed to transmit a single random access signal if an RAR reception duration expires and no RAR is received or indication information indicating that the UE is allowed to transmit a plurality of random access signals if an RAR reception duration expires and no RAR is received, selecting random access resources different from a random access resource previously used to transmit a random access signal to transmit the plurality of random access signals if an RAR reception duration expires and no RAR is received.

The UE 60 may implement the processes implemented by the UE in the foregoing embodiments. To avoid repetition, details are not described herein again.

In some embodiments of the present disclosure, UE transmits a random access signal according to specific random-access-resource configuration information configured by a base station, to adapt to different application scenarios, thereby ensuring that all random access signals transmitted by the UE may be received by the base station and meanwhile reducing the power consumption of the UE.

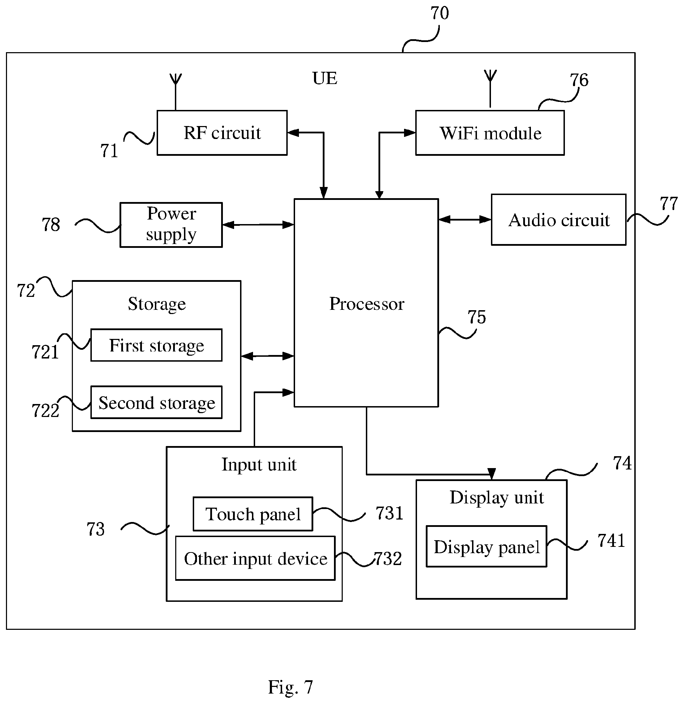

Referring to Fig. 7, the present disclosure provides UE 70. Specifically, the UE 70 in Fig. 7 may be a mobile phone, a tablet computer, a PDA, an in-vehicle computer or the like.

The UE 70 in Fig. 7 includes a radio frequency (RF) circuit 71, a storage 72, an input unit 73, a display unit 74, a processor 75, a Wireless Fidelity (WiFi) module 76, an audio circuit 77, a power supply 78.

The input unit 73 may be configured to: receive numerical or character information input by a user, and generate a signal input related to a user setting and function control of the UE 70.

Specifically, in some embodiments of the present disclosure, the input unit 73 may include a touch panel 731. The touch panel 731 is also referred to as a touch screen, and may collect a touch operation (for example, an operation performed by the user on the touch panel 731 by using any suitable object or accessory such as a finger or a stylus) of the user on or near the touch panel 731, and drive a corresponding connection apparatus according to a preset program. Optionally, the touch panel 731 may include two parts, namely, a touch detection apparatus and a touch controller. The touch detection apparatus detects a position touched by the user and detects a signal generated by the touch operation, and transfers the signal to the touch controller. The touch controller receives touch information from the touch detection apparatus, converts the touch information into touch point coordinates, and then sends the touch point coordinates to the processor 75. The touch controller may receive and execute a command sent by the processor 75. In addition, the touch panel 731 may be implemented in various types such as a resistive type, a capacitive type, an infrared type, and a surface acoustic wave type. In addition to the touch panel 731, the input unit 73 may further include other input device 732. The other input device 732 may include, but is not limited to, one or more of a physical keyboard, a function key (for example, a volume control key or a switch key), a trackball, a mouse, or a joystick.

The display unit 74 may be configured to display information input by the user or information provided to the user and various menu interfaces of the UE 70. The display unit 74 may include a display panel 741. Optionally, the display panel 741 may be configured in the form of a liquid crystal display (LCD), an organic light-emitting diode (OLED) or the like.

It should be noted that the touch panel 731 may cover the display panel 741 to form a touch display screen. After detecting a touch operation on or near the touch display screen, the touch display screen transfers the touch operation to the processor 75 to determine the type of a touch event. The processor 75 then provides a corresponding visual output on the touch display screen according to the type of the touch event.

The touch display screen includes an application program interface display area and a common control display area. An arrangement manner of the application program interface display area and the common control display area is not limited. An arrangement manner that may distinguish between two display areas such as vertical arrangement and horizontal arrangement may be used. The application program interface display area may be configured to display an interface of an application program. Each interface may include at least one interface element such as an icon of an application program and/or a desktop widget. The application program interface display area may be an empty interface that includes no content. The common control display area is configured to display relatively frequently used controls such as a setting button, an interface number, a scrollbar, or an application program icon such as a phone book icon.

In some embodiments of the present disclosure, by calling a software program and/or module stored in a first storage 721 and/or data stored in a second storage 722, the processor 75 is configured to execute the computer program to implement the following steps: receiving random-access-resource configuration information transmitted by a base station, where the random-access-resource configuration information at least includes time-frequency resources available for transmitting a random access signal and a preamble format of the random access resource; transmitting a random access signal to the base station according to the random-access-resource configuration information.

Optionally, as an example, the time-frequency resources available for transmitting a random access signal include at least one of the following: information of a time domain position available for transmitting a random access signal; information of a frequency domain position available for transmitting a random access signal; information of a time domain start position for transmitting a plurality of random access signals; information of a frequency domain start position for transmitting a plurality of random access signals.

Optionally, as an example, the information of the time domain position includes at least one of the following: a system frame number, a subframe number, and a slot number; and the information of the time domain start position includes at least one of the following: a start system frame number, a start subframe number, and a start slot number.

Optionally, as an example, the random-access-resource configuration information further includes at least one of the following: information of a quantity of times the UE is allowed to transmit a random access signal; indication information indicating whether to stop transmitting a random access signal if an RAR is received; a random-access-resource period; an index of a preamble used in each one of a plurality of random access signal transmission; an index of a beam used in each one of a plurality of random access signal transmission; an index of a beam group used in each one of a plurality of random access signal transmission; an index of a beam pair used in each one of a plurality of random access signal transmission.

Optionally, as an example, the processor 75 is configured to execute the computer program to further implement the following steps: acquiring predetermined random-access-resource configuration information; and transmitting a random access signal to the base station according to the random-access-resource configuration information configured by the base station and the predetermined random-access-resource configuration information.

Optionally, as an example, the predetermined random-access-resource configuration information includes information of a quantity of times the UE is allowed to transmit a random access signal and/or indication information indicating whether to stop transmitting a random access signal if an RAR is received.

Optionally, as an example, the information of a quantity of times the UE is allowed to transmit a random access signal includes at least one of the following: indication information indicating that the UE is allowed to transmit a single random access signal; indication information indicating that the UE is allowed to transmit a single random access signal before the UE receives an RAR; indication information indicating that the UE is allowed to transmit a plurality of random access signals; indication information indicating that the UE is allowed to transmit a plurality of random access signals before the UE receives an RAR; indication information indicating that the UE is allowed to transmit a single random access signal if an RAR reception duration expires and no RAR is received; indication information indicating that the UE is allowed to transmit a plurality of random access signals if an RAR reception duration expires and no RAR is received; a quantity of times of transmitting a plurality of random access signals.

Optionally, as an example, the processor 75 is configured to execute the computer program to further implement the following steps: when the random-access-resource configuration information includes indication information indicating that the UE is allowed to transmit a single random access signal and/or indication information indicating that the UE is allowed to transmit a single random access signal before the UE receives an RAR, selecting one time-frequency resource from the time-frequency resources available for transmitting a random access signal, and transmitting one random access signal to the base station on the one selected time-frequency resource before an RAR is received.

Optionally, as an example, the processor 75 is configured to execute the computer program to further implement the following steps: when the random-access-resource configuration information includes indication information indicating that the UE is allowed to transmit a plurality of random access signals and/or indication information indicating that the UE is allowed to transmit a plurality of random access signals before the UE receives an RAR, selecting a plurality of time-frequency resources from the time-frequency resources available for transmitting a random access signal, and transmitting one random access signal to the base station on each selected time-frequency resource.

Optionally, as an example, the processor 75 is configured to execute the computer program to further implement the following step: when the random-access-resource configuration information includes a quantity of times of transmitting a plurality of random access signals, transmitting a quantity of random access signals to the base station where the quantity of random access signals is equal to the quantity of times.

Optionally, as an example, the processor 75 is configured to execute the computer program to further implement the following step: when the random-access-resource configuration information includes an index of a preamble used in each one of a plurality of random access signal transmission, encoding, for each random access signal transmission to the base station, the to-be-transmitted random access signal according to an index of a preamble corresponding to the transmission.

Optionally, as an example, the processor 75 is configured to execute the computer program to further implement the following step: when the random-access-resource configuration information includes an index of a beam, a beam group or a beam pair used in each one of a plurality of random access signal transmission, transmitting, for each random access signal transmission to the base station, the random access signal on a beam, a beam group or a beam pair corresponding to the transmission.

Optionally, as an example, the processor 75 is configured to execute the computer program to further implement the following step: when the random-access-resource configuration information includes information of a time domain start position for transmitting a plurality of random access signals or information of a frequency domain start position for transmitting a plurality of random access signals, transmitting the random access signal on a time-frequency resource corresponding to the information of the time domain start position or the information of the frequency domain start position when a random access signal is transmitted to the base station for the first time.

Optionally, as an example, the processor 75 is configured to execute the computer program to further implement the following step: when the random-access-resource configuration information includes a random-access-resource period, transmitting the plurality of random access signals according to the random-access-resource period.

Optionally, as an example, the processor 75 is configured to execute the computer program to further implement the following step: when the random-access-resource configuration information includes indication information indicating that the UE is allowed to transmit a single random access signal if an RAR reception duration expires and no RAR is received or indication information indicating that the UE is allowed to transmit a plurality of random access signals if an RAR reception duration expires and no RAR is received, selecting random access resources different from a random access resource previously used to transmit a random access signal to transmit the plurality of random access signals if an RAR reception duration expires and no RAR is received.

The UE 70 may implement the processes implemented by the UE in the foregoing embodiments. To avoid repetition, details are not described herein again.

In some embodiments of the present disclosure, UE transmits a random access signal according to specific random-access-resource configuration information configured by a base station, to adapt to different application scenarios, thereby ensuring that all random access signals transmitted by the UE may be received by the base station and meanwhile reducing the power consumption of the UE.

A person of ordinary skill in the art may be aware that, the exemplary units and algorithm steps described in connection with the embodiments disclosed in this specification may be implemented by electronic hardware or a combination of computer software and electronic hardware. Whether the functions are performed by hardware or software depends on specific applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The units described as separate parts may or may not be physically separate, and parts shown as units may or may not be physical units, that is, may be located in one position, or may be distributed on a plurality of network units. Some or all of the units may be selected according to actual needs to achieve the objects of the solutions in the embodiments.

In addition, functional units in the embodiments of the present disclosure may be integrated into one processing unit, or each of the units may exist alone physically, or two or more units are integrated into one unit

If the functions are implemented in the form of a software functional unit and sold or used as an independent product, the functions may be stored in a computer-readable storage medium. Based on such an understanding, the technical solutions of the present disclosure essentially, or the part contributing to the related art, or some of the technical solutions may be implemented in the form of a software product. The software product is stored in a storage medium and includes several instructions for instructing a computer device (which may be a personal computer, a server, a network device or the like) to perform all or some of the steps of the method described in the embodiments of the present disclosure. The foregoing storage medium includes various media that may store program code, such as a Universal Serial Bus (USB) flash drive, a removable hard disk, a ROM, a RAM, a magnetic disk or an optical disc

The foregoing descriptions are merely specific implementations of the present disclosure, but are not intended to limit the scope of the present disclosure. Any variation or substitution readily occurred to a person skilled in the art within the technical scope disclosed in the present disclosure shall fall within the scope of the present disclosure. Therefore, the scope of the present disclosure is defined by the scope of the claims.

## Claims

1. A random access method for execution by a base station, comprising:
configuring (101) random-access-resource configuration information, wherein the random-access-resource configuration information at least comprises time-frequency resources available for user equipment, UE, to transmit a plurality of random access signals to the base station and preamble formats of random access resources;
transmitting (102) the random-access-resource configuration information to the UE;
**characterized in that** the random-access-resource configuration information further comprises at least one of:
indication information indicating whether to stop transmitting a random access signal of the plurality of random access signals after a random access response, RAR, is received;
an index of a transmit beam used in transmitting each one of the plurality of random access signals;
an index of a transmit beam group used in transmitting each one of the plurality of random access signals;
an index of a transmit beam pair used in transmitting each one of the plurality of random access signals.

2. The random access method according to claim 1, wherein the time-frequency resources available for the UE to transmit the plurality of random access signals comprise at least one of:
information of a time domain position available for transmitting a random access signal of the plurality of random access signals;
information of a frequency domain position available for transmitting a random access signal of the plurality of random access signals;
information of a time domain start position for transmitting the plurality of random access signals;
information of a frequency domain start position for transmitting the plurality of random access signals.

3. The random access method according to claim 2, wherein
the information of the time domain position comprises at least one of: a system frame number, a subframe number, and a slot number;
the information of the time domain start position comprises at least one of: a start system frame number, a start subframe number, and a start slot number.

4. The random access method according to claim 1, wherein the random-access-resource configuration information further comprises at least one of:
information of a quantity of times the UE is allowed to perform random access signal transmission;
a period of random access resources for transmitting random access signals;
an index of a preamble used in transmitting each one of the plurality of random access signals.

5. The random access method according to claim 4, wherein the information of the quantity of times the UE is allowed to perform random access signal transmission comprises at least one of:
indication information indicating that the UE is allowed to transmit a single random access signal before the UE receives an RAR;
indication information indicating that the UE is allowed to transmit a plurality of random access signals;
indication information indicating that the UE is allowed to transmit a plurality of random access signals before the UE receives an RAR;
indication information indicating that the UE is allowed to transmit a single random access signal if an RAR reception duration expires and no RAR is received;
indication information indicating that the UE is allowed to transmit a plurality of random access signals if an RAR reception duration expires and no RAR is received;
a quantity of times of transmitting a plurality of random access signals.

6. A random access method for execution by user equipment, UE, comprising:
receiving (201) random-access-resource configuration information transmitted by a base station, wherein the random-access-resource configuration information at least comprises time-frequency resources available for the UE to transmit a plurality of random access signals to the base station and preamble formats of random access resources;
transmitting (202) the plurality of random access signals to the base station according to the random-access-resource configuration information;
**characterized in that** the random-access-resource configuration information further comprises at least one of:
indication information indicating whether to stop transmitting a random access signal of the plurality of random access signals after a random access response, RAR, is received;
an index of a transmit beam used in transmitting each one of the plurality of random access signals;
an index of a transmit beam group used in transmitting each one of the plurality of random access signals;
an index of a transmit beam pair used in transmitting each one of the plurality of random access signals.

7. The random access method according to claim 6, wherein the time-frequency resources available for the UE to transmit the plurality of random access signals comprise at least one of:
information of a time domain position available for transmitting a random access signal of the plurality of random access signals;
information of a frequency domain position available for transmitting a random access signal of the plurality of random access signals;
information of a time domain start position for transmitting the plurality of random access signals;
information of a frequency domain start position for transmitting the plurality of random access signals.

8. The random access method according to claim 7, wherein
the information of the time domain position comprises at least one of: a system frame number, a subframe number, and a slot number;
the information of the time domain start position comprises at least one of: a start system frame number, a start subframe number, and a start slot number.

9. The random access method according to claim 6, wherein the random-access-resource configuration information further comprises at least one of:
information of a quantity of times the UE is allowed to perform random access signal transmission;
a period of random access resources for transmitting random access signals;
an index of a preamble used in transmitting each one of the plurality of random access signals.

10. The random access method according to claim 6, further comprising:
acquiring predetermined random-access-resource configuration information, wherein
the transmitting (202) the plurality of random access signals to the base station according to the random-access-resource configuration information comprises:
transmitting the plurality of random access signals to the base station according to the random-access-resource configuration information configured by the base station and the predetermined random-access-resource configuration information.

11. The random access method according to claim 9, wherein the information of the quantity of times the UE is allowed to perform random access signal transmission comprises at least one of:
indication information indicating that the UE is allowed to transmit a single random access signal before the UE receives an RAR;
indication information indicating that the UE is allowed to transmit a plurality of random access signals;
indication information indicating that the UE is allowed to transmit a plurality of random access signals before the UE receives an RAR;
indication information indicating that the UE is allowed to transmit a single random access signal if an RAR reception duration expires and no RAR is received;
indication information indicating that the UE is allowed to transmit a plurality of random access signals if an RAR reception duration expires and no RAR is received;
a quantity of times of transmitting a plurality of random access signals.

12. The random access method according to claim 11, wherein, when the random-access-resource configuration information comprises indication information indicating that the UE is allowed to transmit a single random access signal before the UE receives an RAR, the transmitting (202) the plurality of random access signals to the base station according to the random-access-resource configuration information comprises:
selecting one time-frequency resource from the time-frequency resources available for the UE to transmit the plurality of random access signals and transmitting one random access signal to the base station on the one selected time-frequency resource before an RAR is received;
or,
when the random-access-resource configuration information comprises indication information indicating that the UE is allowed to transmit a plurality of random access signals and/or indication information indicating that the UE is allowed to transmit a plurality of random access signals before the UE receives an RAR, the transmitting (202) the plurality of random access signals to the base station according to the random-access-resource configuration information comprises:
selecting a plurality of time-frequency resources from the time-frequency resources available for the UE to transmit the plurality of random access signals and transmitting one random access signal to the base station on each selected time-frequency resource;
or,
when the random-access-resource configuration information comprises a quantity of times of transmitting a plurality of random access signals, the transmitting (202) the plurality of random access signals to the base station according to the random-access-resource configuration information comprises:
transmitting a quantity of random access signals to the base station wherein the quantity of random access signals is equal to the quantity of times;
or,
when the random-access-resource configuration information comprises indication information indicating that the UE is allowed to transmit a single random access signal if an RAR reception duration expires and no RAR is received or indication information indicating that the UE is allowed to transmit a plurality of random access signals if an RAR reception duration expires and no RAR is received, the transmitting (202) the plurality of random access signals to the base station according to the random-access-resource configuration information comprises:
selecting random access resources different from a random access resource previously used to transmit a random access signal to transmit the single random access signal or the plurality of random access signals if an RAR reception duration expires and no RAR is received.

13. The random access method according to claim 9, wherein, when the random-access-resource configuration information comprises an index of a preamble used in transmitting each one of the plurality of random access signals, the transmitting (202) the plurality of random access signals to the base station according to the random-access-resource configuration information comprises:
encoding, for each random access signal transmission to the base station, the to-be-transmitted random access signal according to an index of a preamble corresponding to the transmission;
or,
when the random-access-resource configuration information comprises an index of a transmit beam, a transmit beam group or a transmit beam pair used in transmitting each one of the plurality of random access signals, the transmitting (202) the plurality of random access signals to the base station according to the random-access-resource configuration information comprises:
transmitting, for each random access signal transmission to the base station, the random access signal on a transmit beam, a transmit beam group or a transmit beam pair corresponding to the transmission;
or,
when the random-access-resource configuration information comprises the period of random access resources for transmitting random access signals, the transmitting (202) the plurality of random access signals to the base station according to the random-access-resource configuration information comprises:
transmitting the plurality of random access signals according to the period of random access resources for transmitting random access signals.

14. A base station, comprising:
a configuration unit (31), configured to configure random-access-resource configuration information, wherein the random-access-resource configuration information at least comprises time-frequency resources available for user equipment, UE, to transmit a plurality of random access signals to the base station and preamble formats of random access resources;
a transmission unit (32), configured to transmit the random-access-resource configuration information to the UE;
**characterized in that** the random-access-resource configuration information further comprises at least one of:
indication information indicating whether to stop transmitting a random access signal of the plurality of random access signals after a random access response, RAR, is received;
an index of a transmit beam used in transmitting each one of the plurality of random access signals;
an index of a transmit beam group used in transmitting each one of the plurality of random access signals;
an index of a transmit beam pair used in transmitting each one of the plurality of random access signals.

15. User equipment, UE, comprising:
a receiving unit (41), configured to receive random-access-resource configuration information transmitted by a base station, wherein the random-access-resource configuration information at least comprises time-frequency resources available for the UE to transmit a plurality of random access signals to the base station and preamble formats of random access resources;
a transmission unit (42), configured to transmit the plurality of random access signals to the base station according to the random-access-resource configuration information;
**characterized in that** the random-access-resource configuration information further comprises at least one of:
indication information indicating whether to stop transmitting a random access signal of the plurality of random access signals after a random access response, RAR, is received;
an index of a transmit beam used in transmitting each one of the plurality of random access signals;
an index of a transmit beam group used in transmitting each one of the plurality of random access signals;
an index of a transmit beam pair used in transmitting each one of the plurality of random access signals.

## Patentansprüche

1. Direktzugriffsverfahren zur Ausführung durch eine Basisstation, umfassend:
Konfigurieren (101) von Direktzugriffsressource-Konfigurationsinformationen, wobei die Direktzugriffsressource-Konfigurationsinformationen zumindest Zeit-Frequenz-Ressourcen, die für Benutzerausrüstung, UE, verfügbar sind, um eine Vielzahl von Direktzugriffssignalen an die Basisstation zu übertragen, und Präambelformate von Direktzugriffsressourcen umfassen;
Übertragen (102) der Direktzugriffsressource-Konfigurationsinformationen an die UE;
**dadurch gekennzeichnet, dass** die Direktzugriffsressource-Konfigurationsinformationen ferner mindestens eines von Folgenden umfassen:
Angabedaten, die angeben, ob ein Übertragen eines Direktzugriffssignals der Vielzahl von Direktzugriffssignalen nach Empfangen einer Direktzugriffsantwort, RAR, beendet werden soll;
einen Index eines Übertragungsstrahls, der beim Übertragen jedes einzelnen der Vielzahl von Direktzugriffssignalen verwendet wird;
einen Index einer Übertragungsstrahlgruppe, die beim Übertragen jedes einzelnen der Vielzahl von Direktzugriffssignalen verwendet wird;
einen Index eines Übertragungsstrahlenpaars, das beim Übertragen jedes einzelnen der Vielzahl von Direktzugriffssignalen verwendet wird.

2. Direktzugriffsverfahren nach Anspruch 1, wobei die Zeit-Frequenz-Ressourcen, die für die UE verfügbar sind, um die Vielzahl von Direktzugriffssignalen zu übertragen, mindestens eines von Folgenden umfassen:
Informationen einer Zeitbereichsposition, die zum Übertragen eines Direktzugriffssignals der Vielzahl von Direktzugriffssignalen verfügbar ist;
Informationen einer Frequenzbereichsposition, die zum Übertragen eines Direktzugriffssignals der Vielzahl von Direktzugriffssignalen verfügbar ist;
Informationen einer Zeitbereichsstartposition zum Übertragen der Vielzahl von Direktzugriffssignalen;
Informationen einer Frequenzbereichsstartposition zum Übertragen der Vielzahl von Direktzugriffssignalen.

3. Direktzugriffsverfahren nach Anspruch 2, wobei
die Informationen der Zeitbereichsposition mindestens eines von Folgenden umfassen: eine System-Frame-Nummer, eine Subframe-Nummer und eine Slot-Nummer;
die Informationen der Zeitbereichsstartposition mindestens eines von Folgenden umfassen: eine Startsystem-Frame-Nummer, eine Start-Subframe-Nummer und eine Start-Slot-Nummer.

4. Direktzugriffsverfahren nach Anspruch 1, wobei die Direktzugriffsressource-Konfigurationsinformationen mindestens eines von folgenden umfassen:
Informationen einer Anzahl von Malen, die die UE ein Direktzugriffssignal übertragen darf;
eine Periode von Direktzugriffsressourcen zum Übertragen von Direktzugriffssignalen;
einen Index einer Präambel, die beim Übertragen jedes einzelnen der Vielzahl von Direktzugriffssignalen verwendet wird.

5. Direktzugriffsverfahren nach Anspruch 4, wobei die Informationen der Anzahl von Malen, die die UE eine Direktzugriffssignal-Übertragung durchführen darf, mindestens eines von Folgenden umfasst:
Angabeinformationen, die angeben, dass die UE ein einzelnes Direktzugriffssignal übertragen darf, bevor die UE eine RAR empfängt;
Angabeinformationen, die angeben, dass die UE eine Vielzahl von Direktzugriffssignalen übertragen darf;
Angabeinformationen, die angeben, dass die UE eine Vielzahl von Direktzugriffssignalen übertragen darf, bevor die UE eine RAR empfängt;
eine Information, die angeben, dass die UE ein einzelnes Direktzugriffssignal übertragen darf, wenn eine RAR-Empfangsdauer abläuft und keine RAR empfangen wird;
Angabeinformationen, die angeben, dass die UE eine Vielzahl von Direktzugriffssignalen übertragen darf, wenn eine RAR-Empfangsdauer abläuft und keine RAR empfangen wird;
eine Anzahl von Malen eines Übertragens einer Vielzahl von Direktzugriffssignalen.

6. Direktzugriffsverfahren zur Ausführung durch eine Benutzerausrüstung, UE, umfassend:
Empfangen (201) von Direktzugriffsressource-Konfigurationsinformationen, die von einer Basisstation übertragen werden, wobei die Direktzugriffsressource-Konfigurationsinformationen zumindest Zeit-Frequenz-Ressourcen, die für die UE verfügbar sind, um eine Vielzahl von Direktzugriffssignalen an die Basisstation zu übertragen, und Präambelformate von Direktzugriffsressourcen umfassen;
Übertragen (202) der Vielzahl von Direktzugriffssignalen an die Basisstation gemäß den Direktzugriffsressource-Konfigurationsinformationen;
**dadurch gekennzeichnet, dass** die Direktzugriffsressource-Konfigurationsinformationen ferner mindestens eines von Folgenden umfassen:
Angabedaten, die angeben, ob ein Übertragen eines Direktzugriffssignals der Vielzahl von Direktzugriffssignalen nach Empfangen einer Direktzugriffsantwort, RAR, beendet werden soll;
einen Index eines Übertragungsstrahls, der beim Übertragen jedes einzelnen der Vielzahl von Direktzugriffssignalen verwendet wird;
einen Index einer Übertragungsstrahlgruppe, die beim Übertragen jedes einzelnen der Vielzahl von Direktzugriffssignalen verwendet wird;
einen Index eines Übertragungsstrahlenpaars, das beim Übertragen jedes einzelnen der Vielzahl von Direktzugriffssignalen verwendet wird.

7. Direktzugriffsverfahren nach Anspruch 6, wobei die Zeit-Frequenz-Ressourcen, die für die UE verfügbar sind, um die Vielzahl von Direktzugriffssignalen zu übertragen, mindestens eines von Folgenden umfassen:
Informationen einer Zeitbereichsposition, die zum Übertragen eines Direktzugriffssignals der Vielzahl von Direktzugriffssignalen verfügbar ist;
Informationen einer Frequenzbereichsposition, die zum Übertragen eines Direktzugriffssignals der Vielzahl von Direktzugriffssignalen verfügbar ist;
Informationen einer Zeitbereichsstartposition zum Übertragen der Vielzahl von Direktzugriffssignalen;
Informationen einer Frequenzbereichsstartposition zum Übertragen der Vielzahl von Direktzugriffssignalen.

8. Direktzugriffsverfahren nach Anspruch 7, wobei
die Informationen der Zeitbereichsposition mindestens eines von Folgenden umfassen: eine System-Frame-Nummer, eine Subframe-Nummer und eine Slot-Nummer;
die Informationen der Zeitbereichsstartposition mindestens eines von Folgenden umfassen: eine Startsystem-Frame-Nummer, eine Start-Subframe-Nummer und eine Start-Slot-Nummer.

9. Direktzugriffsverfahren nach Anspruch 6, wobei die Direktzugriffsressource-Konfigurationsinformationen mindestens eines von folgenden umfassen:
Informationen einer Anzahl von Malen, die die UE ein Direktzugriffssignal übertragen darf;
eine Periode von Direktzugriffsressourcen zum Übertragen von Direktzugriffssignalen;
einen Index einer Präambel, die beim Übertragen jedes einzelnen der Vielzahl von Direktzugriffssignalen verwendet wird.

10. Direktzugriffsverfahren nach Anspruch 6, ferner umfassend:
Erfassen vorbestimmter Direktzugriffsressource-Konfigurationsinformationen, wobei
das Übertragen (202) der Vielzahl von Direktzugriffssignalen an die Basisstation gemäß den Direktzugriffsressourcen-Konfigurationsinformation Folgendes umfasst:
Übertragen der Vielzahl von Direktzugriffssignalen an die Basisstation gemäß den von der Basisstation konfigurierten Direktzugriffsressource-Konfigurationsinformationen und den vorbestimmten Direktzugriffsressource-Konfigurationsinformationen.

11. Direktzugriffsverfahren nach Anspruch 9, wobei die Informationen der Anzahl von Malen, die die UE eine Direktzugriffssignal-Übertragung durchführen darf, mindestens eines von Folgenden umfassen:
Angabeinformationen, die angeben, dass die UE ein einzelnes Direktzugriffssignal übertragen darf, bevor die UE eine RAR empfängt;
Angabeinformationen, die angeben, dass die UE eine Vielzahl von Direktzugriffssignalen übertragen darf;
Angabeinformationen, die angeben, dass die UE eine Vielzahl von Direktzugriffssignalen übertragen darf, bevor die UE eine RAR empfängt;
eine Information, die angeben, dass die UE ein einzelnes Direktzugriffssignal übertragen darf, wenn eine RAR-Empfangsdauer abläuft und keine RAR empfangen wird;
Angabeinformationen, die angeben, dass die UE eine Vielzahl von Direktzugriffssignalen übertragen darf, wenn eine RAR-Empfangsdauer abläuft und keine RAR empfangen wird;
eine Anzahl von Malen eines Übertragens einer Vielzahl von Direktzugriffssignalen.

12. Direktzugriffsverfahren nach Anspruch 11, wobei, wenn die Direktzugriffsressource-Konfigurationsinformation Angabedaten umfasst, die angeben, dass die UE ein einzelnes Direktzugriffssignal übertragen darf, bevor die UE eine RAR empfängt, ein Übertragen (202) der Vielzahl von Direktzugriffssignalen an die Basisstation gemäß den Direktzugriffsressource-Konfigurationsinformation Folgendes umfasst:
Auswählen einer Zeit-Frequenz-Ressource der Zeit-Frequenz-Ressourcen, die für die UE verfügbar sind, um die Vielzahl von Direktzugriffssignalen zu übertragen, und Übertragen eines Direktzugriffssignals an die Basisstation auf der einen ausgewählten Zeit-Frequenz-Ressource, bevor eine RAR empfangen wird;
oder
wenn die Direktzugriffsressource-Konfigurationsinformationen Angabeinformationen umfassen, die angeben, dass die UE eine Vielzahl von Direktzugriffssignalen übertragen darf, und/oder Angabeinformationen, die angeben, dass die UE eine Vielzahl von Direktzugriffssignalen zu übertragen darf, bevor die UE eine RAR empfängt, das Übertragen (202) der Vielzahl von Direktzugriffssignalen an die Basisstation gemäß den Direktzugriffsressource-Konfigurationsinformationen Folgendes umfasst:
Auswählen einer Vielzahl von Zeit-Frequenz-Ressourcen der Zeit-Frequenz-Ressourcen, die für die UE verfügbar sind, um die Vielzahl von Direktzugriffssignalen zu übertragen, und Übertragen eines Direktzugriffssignals an die Basisstation auf jeder ausgewählten Zeit-Frequenz-Ressource;
oder
wenn die Direktzugriffsressourcen-Konfigurationsinformation eine Anzahl von Malen des Übertragens einer Vielzahl von Direktzugriffssignalen umfassen, das Übertragen (202) der Vielzahl von Direktzugriffssignalen an die Basisstation gemäß den Direktzugriffsressourcen-Konfigurationsinformation Folgendes umfasst:
Übertragen einer Anzahl von Direktzugriffssignalen an die Basisstation, wobei die Anzahl der Direktzugriffssignale gleich wie die Anzahl der Male ist;
oder
wenn die Direktzugriffsressource-Konfigurationsinformationen Angabeinformationen umfassen, die angeben, dass die UE ein einzelnes Direktzugriffssignal übertragen darf, wenn eine RAR-Empfangsdauer abläuft und keine RAR empfangen wird, oder Angabeinformationen, die angeben, dass die UE eine Vielzahl von Direktzugriffssignalen übertragen darf, wenn eine RAR-Empfangsdauer abläuft und keine RAR empfangen wird, das Übertragen (202) der Vielzahl von Direktzugriffssignalen an die Basisstation gemäß den Direktzugriffsressource-Konfigurationsinformationen Folgendes umfasst:
Auswählen von Direktzugriffsressourcen, die sich von einer Direktzugriffsressource unterscheiden, die zuvor zum Übertragen eines Direktzugriffssignals verwendet wurde, um das einzelne Direktzugriffssignal oder die Vielzahl von Direktzugriffssignalen zu übertragen, wenn eine RAR-Empfangsdauer abläuft und keine RAR empfangen wird.

13. Direktzugriffsverfahren nach Anspruch 9, wobei, wenn die Direktzugriffsressourcen-Konfigurationsinformation einen Index einer Präambel umfassen, die beim Übertragen jedes der Vielzahl von Direktzugriffssignalen verwendet wird, das Übertragen (202) der Vielzahl von Direktzugriffssignalen an die Basisstation gemäß den Direktzugriffsressourcen-Konfigurationsinformation Folgendes umfasst:
Kodieren des zu übertragenden Direktzugriffssignals für jede Übertragung an die Basisstation gemäß einem Index einer Präambel, die der Übertragung entspricht;
oder
wenn die Direktzugriffsressource-Konfigurationsinformationen einen Index eines Übertragungsstrahls, einer Übertragungsstrahlgruppe oder eines Übertragungsstrahlpaars umfassen, die beim Übertragen jedes der Vielzahl von Direktzugriffssignalen verwendet werden, das Übertragen (202) der Vielzahl von Direktzugriffssignalen an die Basisstation gemäß den Direktzugriffsressourcen-Konfigurationsinformationen Folgendes umfasst:
Übertragen, für jede Direktzugriffssignal-Übertragung an die Basisstation, des Direktzugriffssignals auf einem Übertragungsstrahl, einer Übertragungsstrahlgruppe oder einem Übertragungsstrahlpaar, der/die/das der Übertragung entspricht;
oder
wenn die Direktzugriffsressource-Konfigurationsinformationen die Periode von Direktzugriffsressourcen zum Übertragen von Direktzugriffssignalen umfassten das Übertragen (202) der Vielzahl von Direktzugriffssignalen an die Basisstation gemäß den Direktzugriffsressource-Konfigurationsinformationen Folgendes umfasst:
Übertragen der Vielzahl von Direktzugriffssignalen gemäß der Periode von Direktzugriffsressourcen zum Übertragen von Direktzugriffssignalen.

14. Basisstation, umfassend:
eine Konfigurationseinheit (31), die konfiguriert ist, um Direktzugriffsressource-Konfigurationsinformationen zu konfigurieren, wobei die Direktzugriffsressource-Konfigurationsinformationen zumindest Zeit-Frequenz-Ressourcen, die für Benutzerausrüstung, UE, verfügbar sind, um eine Vielzahl von Direktzugriffssignalen an die Basisstation zu übertragen, und Präambelformate von Direktzugriffsressourcen umfassen;
eine Übertragungseinheit (32), die konfiguriert ist, um die Direktzugriffsressource-Konfigurationsinformationen an die UE zu übertragen;
**dadurch gekennzeichnet, dass** die Direktzugriffsressource-Konfigurationsinformationen ferner mindestens eines von Folgenden umfassen:
Angabedaten, die angeben, ob ein Übertragen eines Direktzugriffssignals der Vielzahl von Direktzugriffssignalen nach Empfangen einer Direktzugriffsantwort, RAR, beendet werden soll;
einen Index eines Übertragungsstrahls, der beim Übertragen jedes einzelnen der Vielzahl von Direktzugriffssignalen verwendet wird;
einen Index einer Übertragungsstrahlgruppe, die beim Übertragen jedes einzelnen der Vielzahl von Direktzugriffssignalen verwendet wird;
einen Index eines Übertragungsstrahlenpaars, das beim Übertragen jedes einzelnen der Vielzahl von Direktzugriffssignalen verwendet wird.

15. Benutzerausrüstung, UE, umfassend:
eine Empfangseinheit (41), die konfiguriert ist, um von einer Basisstation übertragenen Direktzugriffsressource-Konfigurationsinformationen zu empfangen, wobei die Direktzugriffsressource-Konfigurationsinformationen zumindest Zeit-Frequenz-Ressourcen, die für die UE verfügbar sind, um eine Vielzahl von Direktzugriffssignalen an die Basisstation zu übertragen, und Präambelformate von Direktzugriffsressourcen umfassen;
eine Übertragungseinheit (42), die konfiguriert ist, um die Vielzahl von Direktzugriffssignalen gemäß den Konfigurationsinformationen der Direktzugriffsressourcen an die Basisstation zu übertragen;
**dadurch gekennzeichnet, dass** die Direktzugriffsressource-Konfigurationsinformationen ferner mindestens eines von Folgenden umfassen:
Angabedaten, die angeben, ob ein Übertragen eines Direktzugriffssignals der Vielzahl von Direktzugriffssignalen nach Empfangen einer Direktzugriffsantwort, RAR, beendet werden soll;
einen Index eines Übertragungsstrahls, der beim Übertragen jedes einzelnen der Vielzahl von Direktzugriffssignalen verwendet wird;
einen Index einer Übertragungsstrahlgruppe, die beim Übertragen jedes einzelnen der Vielzahl von Direktzugriffssignalen verwendet wird;
einen Index eines Übertragungsstrahlenpaars, das beim Übertragen jedes einzelnen der Vielzahl von Direktzugriffssignalen verwendet wird.

## Revendications

1. Procédé d'accès aléatoire à exécuter par une station de base, comprenant :
la configuration (101) d'informations de configuration de ressources d'accès aléatoire, dans lequel les informations de configuration de ressources d'accès aléatoire comprennent au moins des ressources de temps-fréquence disponibles pour que l'équipement d'utilisateur (UE) envoie une pluralité de signaux d'accès aléatoire à la station de base et des formats de préambule de ressources d'accès aléatoire ;
l'envoi (102) des informations de configuration de ressources d'accès aléatoire à l'UE ;
**caractérisé en ce que** les informations de configuration de ressources d'accès aléatoire comprennent en outre au moins l'un des éléments suivants :
des informations d'indication indiquant s'il faut arrêter d'envoyer un signal d'accès aléatoire de la pluralité de signaux d'accès aléatoire après la réception d'une réponse d'accès aléatoire (RAR) ;
un index d'un faisceau d'émission utilisé pour envoyer chacun de la pluralité de signaux d'accès aléatoire ;
un index d'un groupe de faisceaux d'émission utilisés pour envoyer chacun de la pluralité de signaux d'accès aléatoire ;
un index d'une paire de faisceaux d'émission utilisés pour envoyer chacun de la pluralité de signaux d'accès aléatoire.

2. Procédé d'accès aléatoire selon la revendication 1, dans lequel les ressources temps-fréquence disponibles pour que l'UE envoie la pluralité de signaux d'accès aléatoire comprennent au moins l'un des éléments suivants :
des informations sur une position dans le domaine temporel disponible pour l'envoi d'un signal d'accès aléatoire de la pluralité de signaux d'accès aléatoires ;
des informations sur une position dans le domaine fréquentiel disponible pour l'envoi d'un signal d'accès aléatoire de la pluralité de signaux d'accès aléatoires ;
des informations sur une position de départ dans le domaine temporel pour l'envoi de la pluralité de signaux d'accès aléatoire ;
des informations sur une position de départ dans le domaine fréquentiel pour l'envoi de la pluralité de signaux d'accès aléatoire.

3. Procédé d'accès aléatoire selon la revendication 2, dans lequel
les informations relatives à la position dans le domaine temporel comprennent au moins l'un des éléments suivants : un numéro de trame de système, un numéro de sous-trame et un numéro de créneau ;
les informations relatives à la position de départ dans le domaine temporel comprennent au moins l'un des éléments suivants : un numéro de trame de système de départ, un numéro de sous-trame de départ et un numéro de créneau de départ.

4. Procédé d'accès aléatoire selon la revendication 1, dans lequel les informations de configuration de ressources d'accès aléatoire comprennent au moins l'un des éléments suivants :
des informations sur le nombre de fois où l'UE est autorisé à envoyer un signal d'accès aléatoire ;
une période de ressources d'accès aléatoire pour l'envoi de signaux d'accès aléatoire ;
un index d'un préambule utilisé pour envoyer chacun de la pluralité de signaux d'accès aléatoire.

5. Procédé d'accès aléatoire selon la revendication 4, dans lequel les informations sur le nombre de fois où l'UE est autorisé à envoyer un signal d'accès aléatoire comprend au moins l'un des éléments suivants :
des informations d'indication indiquant que l'UE est autorisé à envoyer un signal d'accès aléatoire unique avant que l'UE ne reçoive une RAR ;
des informations d'indication indiquant que l'UE est autorisé à envoyer une pluralité de signaux d'accès aléatoire ;
des informations d'indication indiquant que l'UE est autorisé à envoyer une pluralité de signaux d'accès aléatoire avant que l'UE ne reçoive une RAR ;
des informations d'indication indiquant que l'UE est autorisé à envoyer un signal d'accès aléatoire unique si une durée de réception de RAR expire et qu'aucune RAR n'est reçue ;
des informations d'indication indiquant que l'UE est autorisé à envoyer une pluralité de signaux d'accès aléatoire si une durée de réception de RAR expire et qu'aucune RAR n'est reçue ;
un nombre d'envois d'une pluralité de signaux d'accès aléatoire.

6. Procédé d'accès aléatoire à exécuter par un équipement d'utilisateur (UE) comprenant :
la réception (201) d'informations de configuration de ressources d'accès aléatoire transmises par une station de base, dans lequel les informations de configuration de ressources d'accès aléatoire comprennent au moins des ressources temps-fréquence disponibles pour que l'UE envoie une pluralité de signaux d'accès aléatoire à la station de base et des formats de préambule de ressources d'accès aléatoire ;
l'envoi (202) de la pluralité de signaux d'accès aléatoire à la station de base en fonction des informations de configuration de ressources d'accès aléatoire ;
**caractérisé en ce que** les informations de configuration de ressources d'accès aléatoire comprennent en outre au moins l'un des éléments suivants :
des informations d'indication indiquant s'il faut arrêter d'envoyer un signal d'accès aléatoire de la pluralité de signaux d'accès aléatoire après la réception d'une réponse d'accès aléatoire (RAR) ;
un index d'un faisceau d'émission utilisé pour envoyer chacun de la pluralité de signaux d'accès aléatoire ;
un index d'un groupe de faisceaux d'émission utilisés pour envoyer chacun de la pluralité de signaux d'accès aléatoire ;
un index d'une paire de faisceaux d'émission utilisés pour envoyer chacun de la pluralité de signaux d'accès aléatoire.

7. Procédé d'accès aléatoire selon la revendication 6, dans lequel les ressources temps-fréquence disponibles pour que l'UE envoie la pluralité de signaux d'accès aléatoire comprennent au moins l'une des informations suivantes :
des informations sur une position dans le domaine temporel disponible pour l'envoi d'un signal d'accès aléatoire de la pluralité de signaux d'accès aléatoires ;
des informations sur une position dans le domaine fréquentiel disponible pour l'envoi d'un signal d'accès aléatoire de la pluralité de signaux d'accès aléatoires ;
des informations sur une position de départ dans le domaine temporel pour l'envoi de la pluralité de signaux d'accès aléatoire ;
des informations sur une position de départ dans le domaine fréquentiel pour l'envoi de la pluralité de signaux d'accès aléatoire.

8. Procédé d'accès aléatoire selon la revendication 7, dans lequel
les informations relatives à la position dans le domaine temporel comprennent au moins l'un des éléments suivants : un numéro de trame de système, un numéro de sous-trame et un numéro de créneau ;
les informations relatives à la position de départ dans le domaine temporel comprennent au moins l'un des éléments suivants : un numéro de trame de système de départ, un numéro de sous-trame de départ et un numéro de créneau de départ.

9. Procédé d'accès aléatoire selon la revendication 6, dans lequel les informations de configuration de ressources d'accès aléatoire comprennent au moins l'un des éléments suivants :
des informations sur le nombre de fois où l'UE est autorisé à envoyer un signal d'accès aléatoire ;
une période de ressources d'accès aléatoire pour l'envoi de signaux d'accès aléatoire ;
un index d'un préambule utilisé pour envoyer chacun de la pluralité de signaux d'accès aléatoire.

10. Procédé d'accès aléatoire selon la revendication 6, comprenant en outre :
l'acquisition d'informations prédéterminées sur la configuration de ressources d'accès aléatoire, dans lequel
l'envoi (202) de la pluralité de signaux d'accès aléatoire à la station de base en fonction des informations de configuration de ressources d'accès aléatoire comprend :
l'envoi de la pluralité de signaux d'accès aléatoire à la station de base en fonction des informations de configuration de ressources d'accès aléatoire configurées par la station de base et des informations prédéterminées de configuration de ressources d'accès aléatoire.

11. Procédé d'accès aléatoire selon la revendication 9, dans lequel les informations sur le nombre de fois où l'UE est autorisé à envoyer un signal d'accès aléatoire comprend au moins l'une des informations suivantes :
des informations d'indication indiquant que l'UE est autorisé à envoyer un signal d'accès aléatoire unique avant que l'UE ne reçoive une RAR ;
des informations d'indication indiquant que l'UE est autorisé à envoyer une pluralité de signaux d'accès aléatoire ;
des informations d'indication indiquant que l'UE est autorisé à envoyer une pluralité de signaux d'accès aléatoire avant que l'UE ne reçoive une RAR ;
des informations d'indication indiquant que l'UE est autorisé à envoyer un signal d'accès aléatoire unique si une durée de réception de RAR expire et qu'aucune RAR n'est reçue ;
des informations d'indication indiquant que l'UE est autorisé à envoyer une pluralité de signaux d'accès aléatoire si une durée de réception de RAR expire et qu'aucune RAR n'est reçue ;
un nombre d'envois d'une pluralité de signaux d'accès aléatoire.

12. Procédé d'accès aléatoire selon la revendication 11, dans lequel, lorsque les informations de configuration de ressources d'accès aléatoire comprennent des informations d'indication indiquant que l'UE est autorisé à envoyer un signal d'accès aléatoire unique avant que l'UE ne reçoive une RAR, l'envoi (202) de la pluralité de signaux d'accès aléatoire à la station de base en fonction des informations de configuration de ressources d'accès aléatoire comprend :
la sélection d'une ressource temps-fréquence parmi les ressources temps-fréquence disponibles pour que l'UE envoie la pluralité de signaux d'accès aléatoire et l'envoi d'un signal d'accès aléatoire à la station de base sur la ressource temps-fréquence sélectionnée avant la réception d'une RAR ;
ou,
lorsque les informations de configuration de ressources d'accès aléatoire comprennent des informations d'indication indiquant que l'UE est autorisé à envoyer une pluralité de signaux d'accès aléatoire et/ou des informations d'indication indiquant que l'UE est autorisé à envoyer une pluralité de signaux d'accès aléatoire avant que l'UE ne reçoive une RAR, l'envoi (202) de la pluralité de signaux d'accès aléatoire à la station de base en fonction des informations de configuration de ressources d'accès aléatoire comprend :
la sélection d'une pluralité de ressource temps-fréquence parmi les ressources temps-fréquence disponibles pour que l'UE envoie la pluralité de signaux d'accès aléatoire et l'envoi d'un signal d'accès aléatoire à la station de base sur chaque ressource temps-fréquence sélectionnée ;
ou,
lorsque les informations de configuration de ressources d'accès aléatoire comprennent un nombre d'envois d'une pluralité de signaux d'accès aléatoire, l'envoi (202) de la pluralité de signaux d'accès aléatoire à la station de base en fonction des informations de configuration de ressources d'accès aléatoire comprend :
l'envoi d'une quantité de signaux d'accès aléatoire à la station de base, dans lequel la quantité de signaux d'accès aléatoire est égale au nombre d'envois ;
ou,
lorsque les informations de configuration de ressources d'accès aléatoire comprennent des informations d'indication indiquant que l'UE est autorisé à envoyer un signal d'accès aléatoire unique si une durée de réception de RAR expire et qu'aucune RAR n'est reçue ou des informations indiquant que l'UE est autorisé à envoyer une pluralité de signaux d'accès aléatoire si une durée de réception de RAR expire et qu'aucune RAR n'est reçue, l'envoi (202) de la pluralité de signaux d'accès aléatoire à la station de base en fonction des informations de configuration de ressources d'accès aléatoire comprend :
la sélection de ressources d'accès aléatoire différentes d'une ressource d'accès aléatoire précédemment utilisée pour envoyer un signal d'accès aléatoire afin d'envoyer le signal d'accès aléatoire unique ou la pluralité de signaux d'accès aléatoire si une durée de réception de RAR expire et qu'aucune RAR n'est reçue.

13. Procédé d'accès aléatoire selon la revendication 9, dans lequel, lorsque les informations de configuration de ressources d'accès aléatoire comprennent un index d'un préambule utilisé pour envoyer chacun de la pluralité de signaux d'accès aléatoire, l'envoi (202) de la pluralité de signaux d'accès aléatoire à la station de base en fonction des informations de configuration de ressources d'accès aléatoire comprend :
le codage, pour chaque envoi de signal d'accès aléatoire à la station de base, du signal d'accès aléatoire à envoyer en fonction d'un index d'un préambule correspondant à l'envoi ;
ou,
lorsque les informations de configuration de ressources d'accès aléatoire comprennent un index d'un faisceau d'envoi, un groupe de faisceaux d'envoi ou une paire de faisceaux d'envoi utilisés pour envoyer chacun de la pluralité de signaux d'accès aléatoire, l'envoi (202) de la pluralité de signaux d'accès aléatoire à la station de base en fonction des informations de configuration de ressources d'accès aléatoire comprend :
l'envoi, pour chaque envoi de signal d'accès aléatoire à la station de base, le signal d'accès aléatoire sur un faisceau d'envoi, un groupe de faisceaux d'envoi ou une paire de faisceaux d'envoi correspondant à l'envoi ;
ou,
lorsque les informations de configuration de ressources d'accès aléatoire comprennent la période des ressources d'accès aléatoire pour l'envoi de signaux d'accès aléatoire, l'envoi (202) de la pluralité de signaux d'accès aléatoire à la station de base en fonction des informations de configuration de ressources d'accès aléatoire comprend :
l'envoi de la pluralité de signaux d'accès aléatoire en fonction de la période de ressources d'accès aléatoire pour l'envoi de signaux d'accès aléatoire.

14. Station de base, comprenant :
une unité de configuration (31), configurée pour configurer des informations de configuration de ressources d'accès aléatoire, dans laquelle les informations de configuration de ressources d'accès aléatoire comprennent au moins des ressources de temps-fréquence disponibles pour que l'équipement d'utilisateur (UE) envoie une pluralité de signaux d'accès aléatoire à la station de base et des formats de préambule de ressources d'accès aléatoire ;
une unité d'envoi (32), configurée pour envoyer les informations de configuration de ressources d'accès aléatoire à l'UE ;
**caractérisée en ce que** les informations de configuration de ressources d'accès aléatoire comprennent en outre au moins l'un des éléments suivants :
des informations d'indication indiquant s'il faut arrêter d'envoyer un signal d'accès aléatoire de la pluralité de signaux d'accès aléatoire après la réception d'une réponse d'accès aléatoire (RAR) ;
un index d'un faisceau d'émission utilisé pour envoyer chacun de la pluralité de signaux d'accès aléatoire ;
un index d'un groupe de faisceaux d'émission utilisés pour envoyer chacun de la pluralité de signaux d'accès aléatoire ;
un index d'une paire de faisceaux d'émission utilisés pour envoyer chacun de la pluralité de signaux d'accès aléatoire.

15. Équipement d'utilisateur (UE) comprenant :
une unité de réception (41), configurée pour recevoir des informations de configuration de ressources d'accès aléatoire envoyées par une station de base, dans laquelle les informations de configuration de ressources d'accès aléatoire comprennent au moins des ressources de temps-fréquence disponibles pour que l'UE envoie une pluralité de signaux d'accès aléatoire à la station de base et des formats de préambule de ressources d'accès aléatoire ;
une unité d'envoi (42), configurée pour envoyer la pluralité de signaux d'accès aléatoire à la station de base en fonction des informations de configuration de ressources d'accès aléatoire ;
**caractérisée en ce que** les informations de configuration de ressources d'accès aléatoire comprennent en outre au moins l'un des éléments suivants :
des informations d'indication indiquant s'il faut arrêter d'envoyer un signal d'accès aléatoire de la pluralité de signaux d'accès aléatoire après la réception d'une réponse d'accès aléatoire (RAR) ;
un index d'un faisceau d'émission utilisé pour envoyer chacun de la pluralité de signaux d'accès aléatoire ;
un index d'un groupe de faisceaux d'émission utilisés pour envoyer chacun de la pluralité de signaux d'accès aléatoire ;
un index d'une paire de faisceaux d'émission utilisés pour envoyer chacun de la pluralité de signaux d'accès aléatoire.
